# EUROPEAN PATENT APPLICATION

(11) **EP 4 815 606 A1**
(43) Date of publication of application: **30.09.2026**
(21) Application number: 23959214.0
(22) Date of filing: 23.11.2023
(51) Int. Cl.: H04W 74/08

(54) **WIRELESS COMMUNICATION METHOD, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: BAI, Nianhe, Dongguan, Guangdong 523860 (CN); LU, Liuming, Dongguan, Guangdong 523860 (CN); GAO, Ning, Dongguan, Guangdong 523860 (CN); ZHANG, Jun, Dongguan, Guangdong 523860 (CN); LUO, Chaoming, Dongguan, Guangdong 523860 (CN); HOU, Ronghui, Dongguan, Guangdong 523860 (CN)
(74) Representative: RGTH
(86) International application number: PCT/CN2023/133661
(87) International publication number: WO 2025/107243

(57) **Abstract**

Provided are a wireless communication method, and a communication device. The method comprises: a first station sending a first frame to a second station, wherein the first frame comprises first information, the first information being used for instructing the second station to performing transmission by means of using transmission resources which are held by the first station and are shared to the second station, and the first station is a non-access-point station.

## Description

### TECHNICAL FIELD

This application relates to the field of communications technologies, and more specifically, to a wireless communication method and a communications device.

### BACKGROUND

During communication, how a station (station, STA) and an access point (access point, AP) should achieve flexible scheduling of transmission resources to handle bursty low-latency traffic is a problem that is required to be solved.

### SUMMARY

This application provides a wireless communication method and a communications device. The following describes the aspects related to this application.

According to a first aspect, a wireless communication method is provided, and includes: transmitting, by a first station, a first frame to a second station, where the first frame includes first information, and the first information is used to indicate that a transmission resource held by the first station is to be shared with the second station for transmission.

According to a second aspect, a wireless communication method is provided, and includes: receiving, by a second station, a first frame transmitted by a first station, where the first frame includes first information, and the first information is used to indicate that a transmission resource held by the first station is to be shared with the second station for transmission.

According to a third aspect, there is provided a communications device. The communications device is a first station, and the communications device includes: a communications module, configured to transmit a first frame to a second station, where the first frame includes first information, and the first information is used to indicate that a transmission resource held by the first station is to be shared with the second station for transmission.

According to a fourth aspect, there is provided a communications device. The communications device is a second station, and the communications device includes: a communications module, configured to receive a first frame transmitted by a first station, where the first frame includes first information, and the first information is used to indicate that a transmission resource held by the first station is to be shared with the second station for transmission.

According to a fifth aspect, a communications device is provided. The communications device includes a processor and a memory. The memory is configured to store one or more computer programs, and the processor is configured to invoke the computer program in the memory to cause the communications device to perform some or all of the steps of the method according to the first aspect and/or the second aspect.

According to a sixth aspect, an embodiment of this application provides a communications system, and the communications system includes the foregoing communications device. In another possible design, the system may further include another device that interacts with the communications device in the solution provided in embodiments of this application.

According to a seventh aspect, an embodiment of this application provides a computer-readable storage medium. The computer-readable storage medium stores a computer program, and the computer program causes a communications device to perform some or all of the steps in a method according to the foregoing aspects.

According to an eighth aspect, an embodiment of this application provides a computer program product. The computer program product includes a non-transitory computer-readable storage medium storing a computer program, and the computer program is operable to cause a communications device to perform some or all of the steps of a method according to the foregoing aspects. In some implementations, the computer program product may be a software installation package.

According to a ninth aspect, an embodiment of this application provides a chip, where the chip includes a memory and a processor, and the processor may invoke a computer program from the memory and run the computer program, to implement some or all of steps described in a method according to each of the foregoing aspects.

In embodiments of this application, when a non-AP STA holds a transmission resource, it may authorize an AP to use the transmission resource, thereby achieving flexible scheduling of the transmission resource.

### BRIEF DESCRIPTION OF DRAWINGS

FIG. 1 is a schematic diagram of a wireless communications system to which embodiments of this application are applicable.
FIG. 2 is an example diagram of a preemption process of transmission resources.
FIG. 3 is an example diagram of a manner of sharing a transmission opportunity (transmission opportunity, TXOP).
FIG. 4 is an example diagram of a reverse direction (reverse direction, RD) transmission process.
FIG. 5 is a schematic flowchart of a wireless communication method according to an embodiment of this application.
FIG. 6 is a schematic flowchart of a wireless communication method according to an embodiment of this application.
FIG. 7 is an example diagram of a control field according to an embodiment of this application.
FIG. 8 is an example diagram of an extend TXOP sharing (Extend TXOP Sharing, ETS) field according to an embodiment of this application.
FIG. 9 is an example diagram of an extend TXOP sharing information (Extend TXOP Sharing Info) subfield in FIG. 8.
FIG. 10 is an example diagram of a target user information (Target User Info) subfield in FIG. 8.
FIG. 11 is an example diagram of a structure of a control frame according to an embodiment of this application.
FIG. 12 is an example diagram of a frame control (Frame Control) field in FIG. 11.
FIG. 13 is a schematic diagram of an extremely high throughput medium access control (extremely high throughput media access control, EHT MAC) capabilities information field according to an embodiment of this application.
FIG. 14 is a schematic flowchart of a wireless communication method according to an embodiment of this application.
FIG. 15 is a schematic flowchart of a wireless communication method according to an embodiment of this application.
FIG. 16 is a schematic flowchart of a wireless communication method according to an embodiment of this application.
FIG. 17 is a schematic flowchart of a wireless communication method according to an embodiment of this application.
FIG. 18 is a flowchart of an operation in a restricted extend TXOP sharing mode according to an embodiment of this application.
FIG. 19 is a flowchart of an operation in a restricted extend TXOP sharing mode according to an embodiment of this application.
FIG. 20 is a flowchart of an operation in a restricted extend TXOP sharing mode according to an embodiment of this application.
FIG. 21 is a flowchart of an operation in a restricted extend TXOP sharing mode according to an embodiment of this application.
FIG. 22 is an example diagram of a communication scenario according to an embodiment of this application.
FIG. 23 is an example diagram of a communication scenario according to an embodiment of this application.
FIG. 24 is an example diagram of a communication scenario according to an embodiment of this application.
FIG. 25 is an example diagram of a communication scenario according to an embodiment of this application.
FIG. 26 is an example diagram of a communication scenario according to an embodiment of this application.
FIG. 27 is an example diagram of a communication scenario according to an embodiment of this application.
FIG. 28 is an example diagram of a communication scenario according to an embodiment of this application.
FIG. 29 is an example diagram of a communication scenario according to an embodiment of this application.
FIG. 30 is a flowchart of an operation in a non-restricted extend TXOP sharing mode according to an embodiment of this application.
FIG. 31 is a flowchart of an operation in a non-restricted extend TXOP sharing mode according to an embodiment of this application.
FIG. 32 is a flowchart of an operation in a non-restricted extend TXOP sharing mode according to an embodiment of this application.
FIG. 33 is a flowchart of an operation in a non-restricted extend TXOP sharing mode according to an embodiment of this application.
FIG. 34 is an example diagram of a communication scenario according to an embodiment of this application.
FIG. 35 is an example diagram of a communication scenario according to an embodiment of this application.
FIG. 36 is an example diagram of a communication scenario according to an embodiment of this application.
FIG. 37 is an example diagram of a communication scenario according to an embodiment of this application.
FIG. 38 is an example diagram of a communication scenario according to an embodiment of this application.
FIG. 39 is an example diagram of a communication scenario according to an embodiment of this application.
FIG. 40 is an example diagram of a communication scenario according to an embodiment of this application.
FIG. 41 is a schematic flowchart of a wireless communication method according to an embodiment of this application.
FIG. 42 is an example diagram of a command and status (command and status, CAS) control field according to an embodiment of this application.
FIG. 43 is an example diagram of a high throughput extended capabilities (HT Extended Capabilities) field according to an embodiment of this application.
FIG. 44 is an example diagram of a high efficiency 6GHz capabilities (High Efficiency 6GHz Capabilities) field according to an embodiment of this application.
FIG. 45 is a schematic flowchart of a wireless communication method according to an embodiment of this application.
FIG. 46 is a schematic flowchart of a wireless communication method according to an embodiment of this application.
FIG. 47 is a flowchart of an extend RD transmission operation according to an embodiment of this application.
FIG. 48 is a flowchart of an extend RD transmission operation according to an embodiment of this application.
FIG. 49 is an example diagram of a communication scenario according to an embodiment of this application.
FIG. 50 is an example diagram of a communication scenario according to an embodiment of this application.
FIG. 51 is an example diagram of a communication scenario according to an embodiment of this application.
FIG. 52 is an example diagram of a communication scenario according to an embodiment of this application.
FIG. 53 is a schematic diagram of a structure of a communications device according to an embodiment of this application.
FIG. 54 is a schematic diagram of a structure of a communications device according to an embodiment of this application.
FIG. 55 is a schematic diagram of a structure of an apparatus to which embodiments of this application are applicable.

### DESCRIPTION OF EMBODIMENTS

Technical solutions in this application are described below with reference to the accompanying drawings.

### Communications system

The technical solutions in embodiments of this application may be applied to various communications systems, for example, a wireless local area network (wireless local area networks, WLAN), wireless fidelity (wireless fidelity, WiFi), or another communications system.

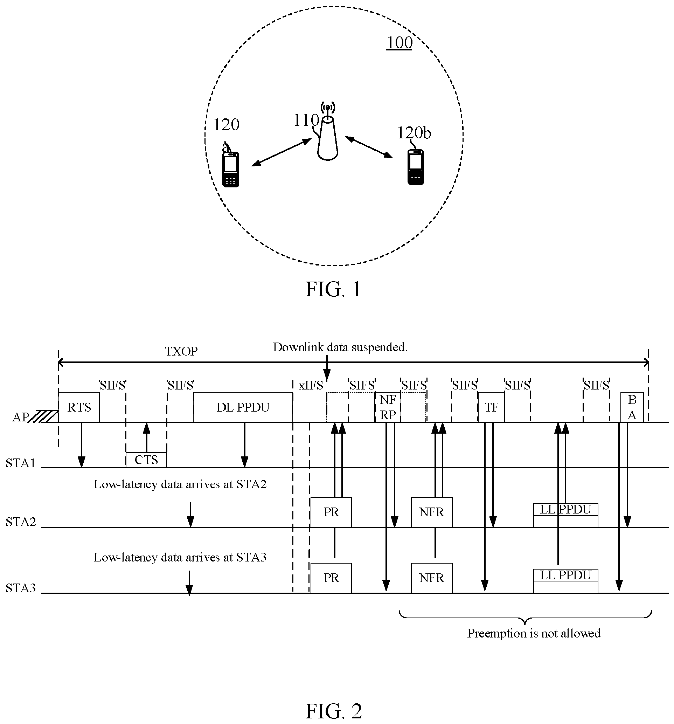

FIG. 1 shows a wireless communications system 100 to which embodiments of this application are applied. The wireless communications system 100 may include an access point 110 and stations (station, STA) 120 that access a network via the access point (access point, AP) 110.

In some scenarios, an AP is referred to as an AP STA. In other words, in a sense, the AP is also a STA.

In some scenarios, a STA is referred to as a non-AP STA (non-AP STA).

Communication in the communications system 100 may be communication between an AP and a STA, or communication between STAs, or communication between a STA and a peer STA (peer STA). The peer STA may refer to a device that performs peer-to-peer communication with the STA. For example, the peer STA may be an AP, or may be a STA.

An AP is equivalent to a bridge between a wired network and a wireless network. A major function of the AP is to connect clients in a wireless network together and then connects the wireless network to an Ethernet. An AP device may be a terminal device (for example, a mobile phone (mobile phone)) or a network device (for example, a router) that has a Wi-Fi chip.

It should be understood that, roles of various communications devices in the communications system 100 are not absolute. A mobile phone is used as an example. In a scenario where the mobile phone is connected to a router, the mobile phone is a STA. In a scenario where the mobile phone functions as a hotspot for other mobile phones, the mobile phone plays the role of an AP.

The AP and the STA may be devices applied in vehicle-to-everything; internet of things nodes, sensors, and the like in internet of things (internet of things, IoT); intelligent cameras, intelligent remote controls, intelligent water meters, intelligent electricity meters, and the like in smart home; and sensors and the like in smart city.

In some embodiments, both the STA and the AP may support the 802.11be standard. The STA or the AP may alternatively support a plurality of current and future WLAN standards of the 802.11 family, such as 802.11ax, 802.11ac, 802.11n, 802.11g, 802.11b, and 802.11a.

There is one or more links between the STA and the AP. In some embodiments, the STA and the AP support multi-band communication. For example, the STA and the AP may perform communication simultaneously on 2.4 GHz, 5 GHz, 6 GHz, 45 GHz, and 60 GHz bands, or may perform communication simultaneously on different channels of a same frequency band (or different frequency bands), thereby improving communication throughput and/or reliability between devices. Such a device is usually referred to as a multi-band device, or a multi-link device (multi-link device, MLD), and is sometimes also referred to as a multi-link entity or a multi-band entity. The multi-link device may be an access point device, or may be a station device. If the multi-link device is an access point device, the multi-link device may include one or more APs. If the multi-link device is a station device, the multi-link device may include one or more non-AP STAs.

A multi-link device including one or more APs may be referred to as an access point multi-link device (access point multi-link device, AP MLD), and a multi-link device including one or more non-AP STAs may be referred to as a non-access point multi-link device (non-ap multi-link device, non-AP MLD).

In embodiments of this application, an AP may include a plurality of APs, and a non-AP STA may include a plurality of STAs. A plurality of links may be formed between the plurality of APs and the plurality of STAs, and data communication may be performed between the plurality of APs and the plurality of STAs via corresponding links.

In embodiments of this application, the STA may be any one of the following that supports the WLAN/WiFi technology: a mobile phone, a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Frequency bands supported in the WLAN technology may include but are not limited to a low frequency band (for example, 2.4 GHz, 5 GHz, or 6 GHz) and a high frequency band (for example, 45 GHz or 60 GHz).

FIG. 1 exemplarily shows one AP and two STAs. Optionally, the communications system 100 may include a plurality of APs and another quantity of STAs. This is not limited in embodiments of this application. In FIG. 1, the AP, the STA 120a, and the STA 120b may be located in a same basic service set (basic service set, BSS). The AP may be associated with the STA 120a. The AP may be associated with the STA 120b.

It should be understood that in embodiments of this application, a device having a communication function in a network or a system may be referred to as a communications device. The communications system 100 shown in FIG. 1 is used as an example. The communications device may include the AP 110 having a communication function and the STA 120. In addition, the communications device mentioned in embodiments of this application may further include other devices in the communications system 100, such as a network controller, a gateway, and other network entities (not shown in FIG. 1), which is not limited in embodiments of this application.

The AP and the STA may be deployed on land, including being deployed indoors or outdoors, handheld, or vehicle-mounted, may be deployed on a water surface, or may be deployed on a plane, a balloon, or a satellite in the air. In embodiments of this application, a scenario in which the AP and the STA are located is not limited.

It should be understood that all or some of functions of the communications device in this application may alternatively be implemented by software functions running on hardware, or by virtualization functions instantiated on a platform (for example, a cloud platform).

With the rise of extended reality (extended reality, XR) devices, there is a growing demand for bursty low-latency traffic services. For uplink (uplink, UL) or downlink (downlink, DL) bursty low-latency traffic, transmission resources are required to be acquired as quickly as possible for related services, so as to complete data transmission. Assuming that a current transmission resource holder is a non-AP STA, if an AP or another non-AP STA within a same BSS generates bursty low-latency traffic, these devices may not be able to acquire transmission resources in time, causing significant latency impact on bursty low-latency traffic services. To address this problem, some solutions provided in related technologies are described below.

### TXOP preemption (pre-emption)

In the proposal "11 23 1229 01 0uhr preemption for low latency application follow up", a transmission solution for bursty low-latency traffic based on TXOP preemption is proposed. In this solution, a maximum length of a large physical layer protocol data unit (physical layer protocol data unit, PPDU) is limited and a transmission interval is set to a variable-length interframe space (x interframe space, xIFS, where xIFS is greater than a short interframe space (short interframe space, SIFS)), thereby providing a preemption opportunity for a transmitter of low-latency traffic. In this solution, whether a next slot can be preempted is indicated by the 1^{st} control frame of a TXOP or a function field of a current PPDU. A transmitter of low-latency traffic may transmit a common preemption request (pre-emption request, PR) within a time interval during which preemption is allowed. After receiving the PR, an AP may initiate low-latency traffic data packet transmission. A specific communication process is as shown in FIG. 2.

The proposal has the following limitations:
First, changing a data transmission slot to xIFS causes additional time overheads for transmission.
Second, the PR transmitted by the STA is essentially an interference signal, and this behavior is suspected of malicious contention.
Third, the preemption behavior of the STA encroaches on a transmission opportunity of an original TXOP holder, which is not conducive to transmission fairness.

### UL TXOP sharing

Conventional TXOP sharing mainly involves an AP sharing a TXOP held by the AP with a STA, that is, performing DL TXOP sharing.

In the proposal "11 23 1620 00 0uhr reverse txop sharing for uhr", benefits of performing UL TXOP sharing by a non-AP STA are discussed. The proposal points out that, based on UL TXOP sharing, the non-AP STA may assist the AP in network management, provide the AP with a more complete uplink and downlink transmission switching mechanism, and provide more preemption manners for low-latency traffic. However, this proposal does not provide specific operation methods.

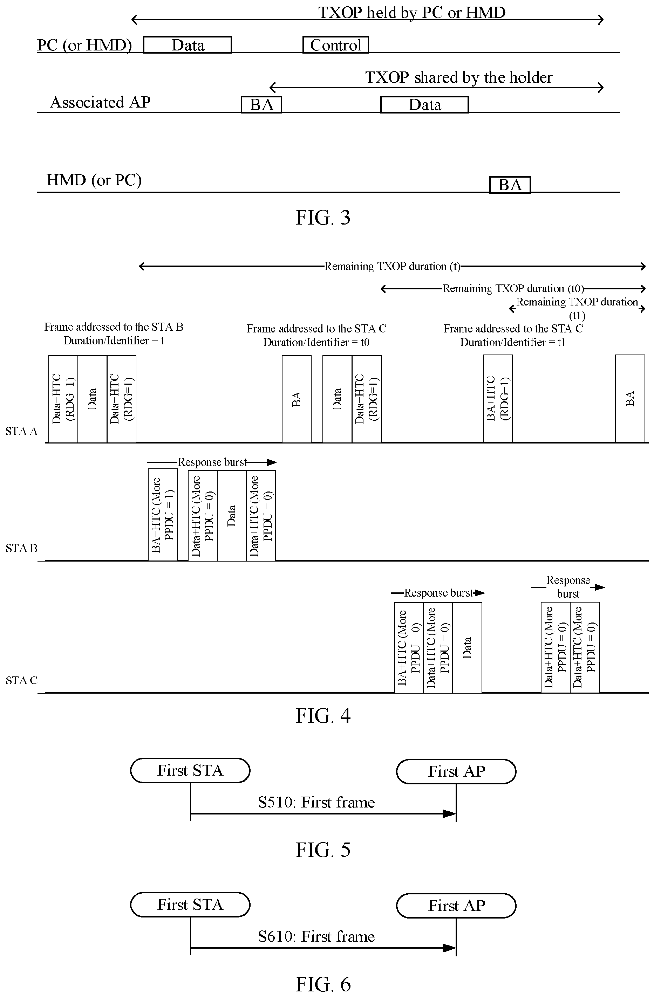

In the proposal "11 23 1387 01 0uhr txop sharing extensions for xr use cases", an application scenario of sharing a TXOP of a non-AP STA is provided. In an AR scenario, an AP may be connected to both a head-mounted device and a sensing device. In addition to performing data transmission with the AP, the head-mounted device is also required to monitor data exchange between the sensing device and the AP. The proposal introduces a new type of TXOP control signal to complete switching operations between transmission resources. A specific communication process is as shown in FIG. 3. In the proposal, a scheme for an XR device to share a TXOP with an AP in a specific scenario is designed. However, this proposal is only applicable to a scenario involving a head-mounted device and a sensing device and is not applicable to other application scenarios.

### RD transmission

In the current 802.11 standard, based on an RD transmission protocol, a STA (an RD initiator) as a TXOP holder may grant remaining time within a TXOP to another STA (an RD responder) for RD transmission. A transmission resource used for subsequent RD transmission may be used as a continuation of a current TXOP, to reduce channel contention during a transmission process. FIG. 4 shows an example of an RD transmission process.

The current RD transmission protocol has significant limitations in applications. For example, the RD transmission process must include an RD initiator. For another example, the AP does not obtain full TXOP transmission authority within an RD transmission sequence. The existence of the above problems means that in practical applications, the current RD protocol is not flexible enough and the utilization of transmission resources is also insufficient.

To address one or more of the above problems, the embodiments of this application are described in detail below. It should be understood that application scenarios of the embodiments of this application include, but are not limited to, single BSS scenarios, overlapping basic service set (overlapping basic service set, OBSS) scenarios, and virtual basic service set (virtual basic service set, VBSS) scenarios.

In embodiments of this application, a STA (for example, a non-AP STA) may grant part or all of transmission resources held by the STA to an AP for use. The transmission resource mentioned here may refer to a TXOP, for example, a TXOP held by the STA. It should be noted that, in various embodiments of this application, the transmission resource and the TXOP may be used interchangeably. After obtaining the TXOP held by the STA, the AP may better perform network management and service scheduling. For example, based on the TXOP, the AP may perform one or more of the following operations: uplink data transmission, downlink data transmission, rapid switching between uplink data transmission and downlink data transmission, multi-user data transmission, BSS internal device management (such as coordinated transmission of a plurality of non-AP STAs within a BSS), and emergency scheduling of bursty low-latency traffic.

For ease of description, a STA (for example, a non-AP STA) holding a TXOP is referred to as a first STA. Referring to FIG. 5, the first STA may transmit a first frame to a first AP (step S510). The first frame may include first information. The first information is used to indicate (or authorize) that a TXOP held by the first station is to be used by or shared with a second STA (the second STA may be, for example, an AP, a case where the second station is the first AP is mainly used as an example for description below, and in a case in which there is no conflict, the first AP below may be replaced with the second station) for transmission. The first STA may be located within a same BSS as the first AP, and may be associated with the first AP. The first STA may grant the TXOP held by the first STA to the first AP for use. The first STA may indicate duration for which the first AP uses this TXOP. The duration may be indicated, for example, by a duration/identifier (Duration/ID) field of the first frame.

There may be a plurality of manners in which the first STA shares or grants the TXOP held by the first STA to the first AP for use. For example, the first STA may share or grant, through a first sharing operation, a TXOP held by the first STA to the first AP for use. For another example, the first STA may share or grant, through a first reverse direction transmission operation, the TXOP held by the first STA to the first AP for use. The above two TXOP granting manners are described in detail below with reference to Embodiment 1 and Embodiment 2 by using examples.

### Embodiment 1: first sharing operation

There is a TXOP sharing operation in related technologies. This sharing operation only supports an AP in sharing a TXOP held by the AP with a STA. Different from this sharing operation, the first sharing operation provided in Embodiment 1 supports the first STA in sharing the TXOP held by the first STA with the first AP. The first sharing operation may be regarded as an extension of the sharing operation provided in the related technologies. Therefore, the first sharing operation may also be referred to as an "extend TXOP sharing operation". It should be noted that in Embodiment 1, the "first sharing operation", the "extend transmission resource sharing operation", and the "extend TXOP sharing operation" may be used interchangeably.

Based on the extend TXOP sharing operation, the first AP may acquire a transmission resource held by the first STA, thereby performing data transmission based on the transmission resource. The scenario shown in FIG. 1 is used as an example. Assuming that the first STA is the STA 120a in FIG. 1, the first AP is the AP 110 in FIG. 1, and the STA 120a holds a TXOP, after obtaining the TXOP held by the STA 120a, the AP 110 may perform DL data transmission, UL data transmission, downlink multi-user (downlink multi-user, DL MU) data transmission, and uplink multi-user (uplink multi-user, UL MU) data transmission with the STA 120a and/or the STA 120b based on this TXOP. The proposal of the extend TXOP sharing operation helps the first AP complete scheduling operations for bursty low-latency traffic in a more timely manner and strengthens resource management in a BSS network.

The extend TXOP sharing operation may be actively initiated by the first STA or requested by the first AP from the first STA. If the extend TXOP sharing operation is to be requested by the first AP, the first AP may first transmit a first request to the first STA to request the extend TXOP sharing operation (or request the TXOP held by the first STA). After receiving the first request, the first STA may initiate the extend TXOP sharing operation, thereby providing a portion of transmission resource for the first AP, such that the first AP may perform data transmission based on the transmission resource.

In some implementations, the extend TXOP sharing operation may include a first sharing mode. In the first sharing mode, the first STA does not restrict a manner in which the first AP uses a transmission resource held by the first STA. Therefore, the first sharing mode may also be referred to as a non-restricted transmission resource sharing mode. For example, when the first STA holding a TXOP provides a portion of transmission resource for the first AP, if the first STA has no data transmission requirement for the first AP during time of the shared TXOP, the non-restricted transmission resource sharing mode may be used; and when the first STA uses the non-restricted transmission resource sharing mode, the first STA does not set any requirement for subsequent data transmission of the first AP.

In some implementations, the extend TXOP sharing operation may include a second sharing mode. In the second sharing mode, the first STA restricts a manner in which the first AP uses a transmission resource held by the first STA. Therefore, the second sharing mode may also be referred to as a restricted transmission resource sharing mode. For example, when the first STA holding a TXOP shares a transmission resource with the first AP, if the first STA expects to impose a transmission requirement on data transmission of the first AP within the shared TXOP, the restricted transmission resource sharing mode may be used, thereby constraining and managing a data exchange manner of the first AP within the shared TXOP. In the restricted transmission resource sharing mode, the first AP is required to comply with a transmission requirement proposed by the first STA, to ensure that the first AP may complete data transmission as expected by the first STA.

For example, in the restricted transmission resource sharing mode, the first STA may restrict a communications device participating in target transmission (the target transmission refers to transmission performed by the first AP based on the transmission resource held by the first STA). For example, the first STA may indicate, by using an association identity (association identity, AID), a target communications device participating in the target transmission. In other words, the first STA may indicate an AID of a target transmission device to the first AP. Correspondingly, when the first AP performs target transmission, the target transmission is required to cover a communications device corresponding to the AID.

For another example, in the restricted transmission resource sharing mode, the first STA may restrict a communication bandwidth corresponding to the target transmission. The communication bandwidth corresponding to the target transmission may include an average bandwidth used for the target transmission, a minimum bandwidth used for the target transmission, and/or a maximum bandwidth used for the target transmission.

For another example, in the restricted transmission resource sharing mode, the first STA may restrict both the target communications device participating in the target transmission and the communication bandwidth corresponding to the target transmission. For example, the first STA may specify that the target transmission is required to cover a communications device corresponding to a specific AID and specify a minimum communication bandwidth to be used by the communications device corresponding to the AID.

For another example, in the restricted transmission resource sharing mode, the first STA may restrict a data category corresponding to the target transmission. For example, the first STA may indicate, by using an access category (access category, AC), a data category of data that is required to be transmitted for the target transmission.

For another example, in the restricted transmission resource sharing mode, the first STA may restrict both the target communications device participating in the target transmission and the data category corresponding to the target transmission. For example, the first STA may specify that the target transmission is required to cover a communications device corresponding to a specific AID and specify a data category of data that is required to be transmitted for communication with the communications device corresponding to the AID.

An implementation of Embodiment 1 is described in more detail below from perspectives of communication frame design and information exchange by using examples.

Referring to FIG. 6, the first STA transmits a first frame to the first AP (step S610). The first frame includes first information. The first information includes information related to an extend TXOP sharing operation.

The first information may be carried in a first field in the first frame. The first field is referred to as an Extend TXOP Sharing field below. When performing the extend TXOP sharing operation, the first STA may manage the extend TXOP sharing operation by using the Extend TXOP Sharing field. The Extend TXOP Sharing field may be a control field (such as a Control subfield in the HT control field) or may be another type of field.

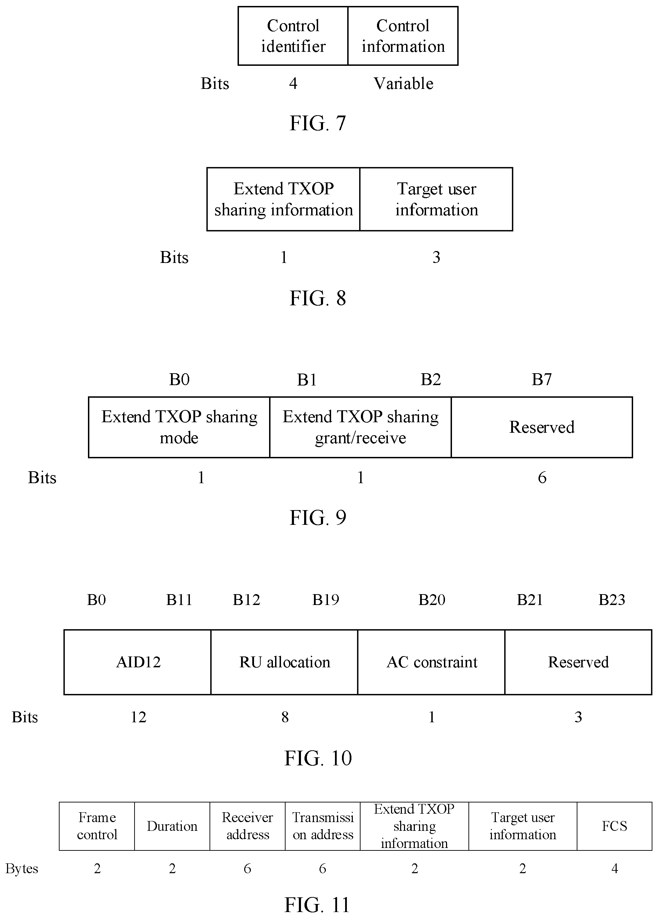

In an example, a new type of Control subfield may be added to a high efficiency variant high throughput control (high efficiency variant high throughput control, HE variant HT Control) field. A Control ID of the Control subfield may be set to, for example, 10. FIG. 7 shows an example of a format of the Control subfield. As shown in FIG. 7, in addition to the Control ID, the Control subfield may include control information (Control Information). Table 1 below shows control information represented by each Control ID of the Control subfield and a length of the control information. As shown in Table 1, a field corresponding to the Control ID of 10 is the Extend TXOP Sharing field newly added in embodiments of this application.

**Table 1 Control subfield provided in embodiments of this application**

| Control identifier | Control information represented | Length (bits) of the |
|---|---|---|
| (Control ID) | | control information |
| 0 | Triggered response scheduling (triggered response scheduling, TRS) | 26 |
| 1 | Operating mode (operating mode, OM) | 12 |
| 2 | High efficiency link adaptation (HE link adaptation, HLA)/EHT link adaptation (EHT link adaptation, ELA) | 26 |
| 3 | Buffer status report (buffer status report, BSR) | 26 |
| 4 | Uplink power headroom (UL power headroom, UPH) | 8 |
| 5 | Bandwidth query report (bandwidth query report, BQR) | 10 |
| 6 | Command and status (command and status, CAS) | 8 |
| 7 | EHT operating mode (EHT operating mode, EHT OM) | 6 |
| 8 | Single response scheduling (single response scheduling, SRS) | 10 |
| 9 | AP assistance request (AP assistance request, AAR) | 20 |
| **10** | **Extend TXOP Sharing (ETS)** | **32** |
| 11-14 | Reserved bit | |
| 15 | Ones need expansion surely (ones need expansion surely, ONES) | 26 |

In some implementations, the first information mentioned above may include second information. The second information may be used to indicate a sharing mode of a transmission resource. The sharing mode of the transmission resource may include the non-restricted transmission resource sharing mode (referred to as a non-restricted sharing mode) and/or the restricted transmission resource sharing mode (referred to as a restricted sharing mode) that are mentioned above. For example, a value of the second information may include a first value (for example, 1) and a second value (for example, 0). If the value of the second information is the first value, it indicates that the upcoming or ongoing sharing mode of the transmission resource is the non-restricted sharing mode. If the value of the second information is the second value, it indicates that the upcoming or ongoing sharing mode of the transmission resource is the restricted sharing mode.

In some implementations, the first information mentioned above may include third information. The third information is used to restrict a manner in which the first AP uses the transmission resource. It should be understood that, the first information may include both the second information and the third information. If the second information indicates that the sharing mode of the transmission resource is the restricted sharing mode, the first information may include the third information. Certainly, the embodiments of this application are not limited to this. For example, the first information may include the third information but not the second information. In this case, whether the first STA has restricted a manner in which the first STA uses the transmission resource may be determined based on the value of the third information, thereby determining whether a current sharing mode is the non-restricted sharing mode or the restricted sharing mode.

Furthermore, in some implementations, the third information is used to restrict one or more of the following: the communications device participating in the target transmission (the target transmission refers to transmission performed by the first AP based on the transmission resource), the communication bandwidth corresponding to the target transmission, and the data category corresponding to the target transmission. For description of a meaning of the third information, reference may be made to the foregoing description. Details are not described herein again.

In some implementations, the first information includes fourth information. The fourth information is used to indicate that the first STA accepts (or agrees to) a first request initiated by the first AP. The first request is used to request the extend TXOP sharing operation. In other words, in this implementation, initialization behavior of the extend TXOP sharing operation is: the first AP initiating a request. For example, when the first AP has a transmission resource requirement, it may actively initiate a first request to the first STA, and the first STA agrees to or rejects the sharing request based on its own situation.

In some implementations, the first information includes fifth information. The fifth information is used to indicate that the first STA shares (or actively shares) a transmission resource with the first AP. In other words, in this implementation, initialization behavior of the extend TXOP sharing operation is: the first STA actively initiating sharing. For example, when the first STA expects the first AP to perform data transmission with the second STA, it may actively share a transmission resource held by the first STA with the first AP, allowing the first AP to complete data transmission as expected.

A specific format and content of the extend TXOP sharing field are described below with reference to FIG. 8 to FIG. 10 by using an example in which the first information is carried in the extend TXOP sharing field.

FIG. 8 shows a specific format of the extend TXOP sharing field (used to carry the first information). As can be seen from FIG. 8, the extend TXOP sharing field may include an extend TXOP sharing information (Extend TXOP Sharing Info) subfield and a target user information (Target User Info) subfield. FIG. 9 shows a specific format of the Extend TXOP Sharing Info subfield. As can be seen from FIG. 9, the Extend TXOP Sharing Info subfield may further include one or more of the following subfields: an extend TXOP sharing mode (Extend TXOP Sharing Mode) subfield, or an extend TXOP sharing grant/receive (Extend TXOP Sharing Grant/Receive) subfield. Bits other than these are reserved bits of the Extend TXOP Sharing Info subfield. The Extend TXOP Sharing Mode subfield may be used to carry the second information mentioned above. The Target User Info subfield may be used to carry the third information mentioned above.

FIG. 10 shows a specific format of the Target User Info subfield. As can be seen from FIG. 10, the Target User Info subfield may further include one or more of the following subfields: an AID12 subfield, an RU allocation (RU Allocation) subfield, or an AC constraint (AC Constraint) subfield. The AID12 subfield, the RU Allocation subfield, and the AC Constraint subfield may be used to restrict the target communications device participating in the target transmission, the communication bandwidth corresponding to the target transmission, and the data category corresponding to the target transmission, respectively.

Table 2 shows an example of specific content of the Extend TXOP Sharing Info subfield

**Table 2 Specific content of the Extend TXOP Sharing Info subfield**

| Name | Value | Meaning |
|---|---|---|
| Extend TXOP | 0 | Indicates that the upcoming or ongoing sharing mode is the non-restricted sharing mode. |
| Sharing Mode | | |
| | | In the non-restricted sharing mode, when a STA shares a TXOP with an AP, it carries the third information in the Target User Info subfield, requiring the AP to meet a transmission requirement proposed by the STA within the shared TXOP. |
| | | When the Extend TXOP Sharing Mode subfield is 0, the STA sets an attribute value of the Target User Info subfield according to its own requirements. |
| | 1 | Indicates that the upcoming or ongoing extend TXOP sharing mode is the non-restricted sharing mode. In this mode, when the STA shares a TXOP with the AP, the STA does not impose any transmission requirement. |
| | | When the Extend TXOP Sharing Mode subfield is 1, the STA does not set an attribute value of the Target User Info subfield. |
| Extend TXOP | 0 | a) For the AP, this field is the Extend TXOP Sharing Receive subfield, and when an attribute value of this field is set to 0, it indicates the end of the portion of transmission resource obtained by sharing, and the transmission resource is to be returned to the original transmission resource holder, that is, the STA. |
| Sharing Grant/Extend | | |
| TXOP Sharing | | |
| Receive | | |
| | | b) For the STA, this field is the Extend TXOP Sharing Grant subfield, and when an attribute value of this field is set to 0, it indicates that an extend TXOP sharing operation request (that is, the first request mentioned above) from the AP is rejected. |
| | 1 | a) For the AP, this field is the Extend TXOP Sharing Receive subfield, and when an attribute value of this field is set to 1, it indicates that the AP requests the STA to perform the extend TXOP sharing operation, or indicates an acknowledgment operation of the STA following the extend TXOP sharing operation performed by the STA. |
| | | b) For the STA, this field is the Extend TXOP Sharing Grant subfield, and when an attribute value of this field is set to 1, it indicates that the STA accepts the extend TXOP sharing operation request from the AP, or actively initiates the extend TXOP sharing operation to the AP and shares a transmission resource with the AP. |

Table 3 shows an example of specific content of the Target User Info subfield.

**Table 3 Specific content of the Target User Info subfield**

| Name | Meaning |
|---|---|
| AID12 | This value indicates that the STA requires the AP to include a device corresponding to the AID when performing data communication after acquiring a transmission resource. |
| RU Allocation | This value indicates a minimum communication bandwidth that the STA requires the AP to use when performing data transmission with the device corresponding to the AID after acquiring a transmission resource. |
| AC Constraint | This value indicates whether there is a data category restriction when the STA requires the AP to perform data transmission with the device corresponding to the AID after acquiring a transmission resource. |

An encoding format of the AID12 subfield may be consistent with an encoding format of the AID12 subfield in the user information (User Info) field in the 802.11 standard, as shown in Table 4 below.

**Table 4 Encoding format of the AID12 subfield**

| AID12 subfield | Description |
|---|---|
| 0 | The user information field allocates one or more contiguous random access resource units to an associated STA (User Info field allocates one or more contiguous random access resource unit (RA-RUs) for associated STAs). |
| 1-2007 | The user information field is addressed to an associated STA, and a value of an AID of the STA is equal to a value in the AID12 subfield (User Info field is addressed to an associated STA whose AID is equal to the value in the AID12 subfield). |
| 2008-2044 | Reserved |
| 2045 | The user information field allocates one or more contiguous RA-RUs to an unassociated STA (User Info filed allocates one or more contiguous RA-Rus for unassociated STAs). |
| 2046 | Unallocated resource unit (Unallocated RU) |
| 2047-4094 | Reserved |
| 4095 | Start location of a padding field (Start of Padding field) |

An encoding format of the RU Allocation subfield may be consistent with an encoding format of the RU Allocation subfield in the User Info field in the 802.11 standard, as shown in Table 5 below.

**Table 5 Encoding format of the RU Allocation subfield**

| B7-B1 in the RU Allocation field | Uplink bandwidth (uplink bandwidth, UL BW) field | RU size | RU index |
|---|---|---|---|
| 0-8 | 20 MHz, 40 MHz, 80 MHz, 80+80 MHz or 160 MHz | 26 | RU1 to RU9 |
| 9-17 | 40 MHz, 80 MHz, 80+80 MHz or 160 MHz | | RU10 to RU18 |
| 18-36 | 80 MHz, 80+80 MHz or 160 MHz | | RU19 to RU37 |
| 37-40 | 20 MHz, 40 MHz, 80 MHz, 80+80 MHz or 160 MHz | 52 | RU1 to RU4 |
| 41-44 | 40 MHz, 80 MHz, 80+80 MHz or 160 MHz | | RU5 to RU8 |
| 45-52 | 80 MHz, 80+80 MHz or 160 MHz | | RU9 to RU16 |
| 53, 54 | 20 MHz, 40 MHz, 80 MHz, 80+80 MHz or 160 MHz | 106 | RU1 to RU2 |
| 55, 56 | 40 MHz, 80 MHz, 80+80 MHz or 160 MHz | | RU3 to RU4 |
| 57-60 | 80 MHz, 80+80 MHz or 160 MHz | | RU5 to RU8 |
| 61 | 20 MHz, 40 MHz, 80 MHz, 80+80 MHz or 160 MHz | 242 | RU1 |
| 62 | 40 MHz, 80 MHz, 80+80 MHz or 160 MHz | | RU2 |
| 63, 64 | 80 MHz, 80+80 MHz or 160 MHz | | RU3 to RU4 |
| 65 | 40 MHz, 80 MHz, 80+80 MHz or 160 MHz | 484 | RU1 |
| 66 | 80 MHz, 80+80 MHz or 160 MHz | | RU2 |
| 67 | 80 MHz, 80+80 MHz or 160 MHz | 996 | RU1 |
| 68 | 80+80 MHz or 160 MHz | 2×996 | RU1 |

An encoding manner shown in Table 6 below may be used for the encoding format of the AC Constraint subfield

**Table 6 Encoding format of the AC Constraint subfield**

| Value | Description |
|---|---|
| 0 | The first STA does not restrict the data category corresponding to the target transmission. |
| 1 | The first STA requires that the data category corresponding to the target transmission is the same as a data category corresponding to a traffic identifier (traffic identifer, TID) of a current data frame. |

It should be noted that, a category of the first frame shown in FIG. 6 is not specifically limited in embodiments of this application. In some implementations, the first frame may be a data frame. In some other implementations, to enable the first STA to better implement the extend TXOP sharing operation, the first frame may be designed as a new type of control frame. The control frame may be referred to as, for example, an extend TXOP sharing control frame, or an ETS control frame for short.

For example, the first frame is a control frame. In this case, FIG. 11 shows a possible structure of the control frame. As can be seen from FIG. 11, the control frame includes two fields used for recording information related to the extend TXOP sharing operation: an extend TXOP sharing information (Extend TXOP Sharing Info) field and a target user information (Target User Info) field. For meanings of the two fields, reference may be made to the descriptions in FIG. 8 to FIG. 10 mentioned above.

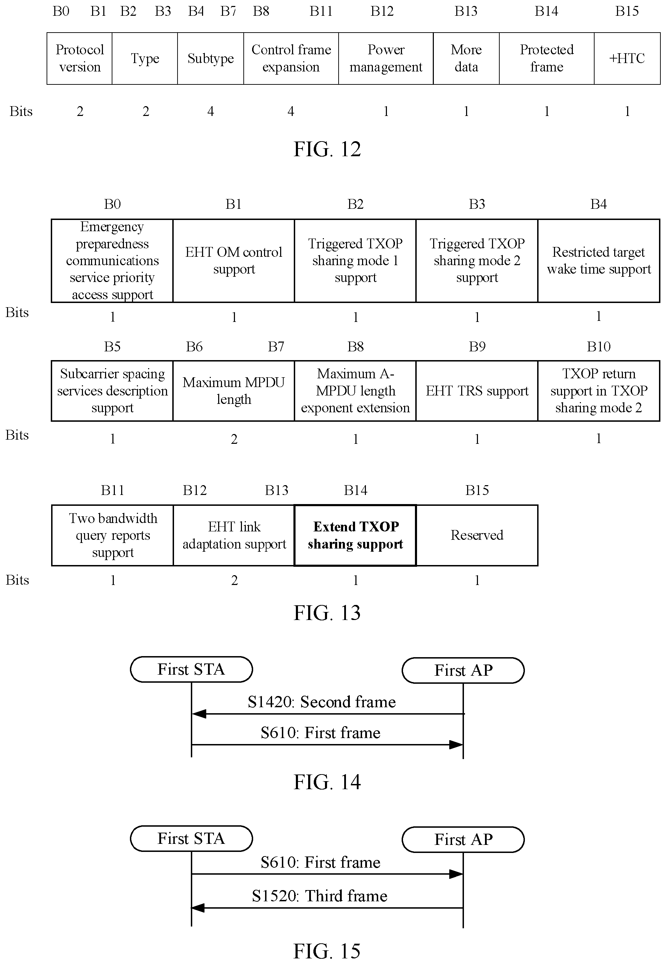

Content of the frame control (Frame Control) field in the control frame shown in FIG. 11 is as shown in FIG. 12. An encoding manner shown in Table 7 below may be used for a subtype (Subtype) subfield and a control frame extension (Control Frame Extension) subfield in the Frame Control field.

**Table 7 Encoding manner of the Subtype and Control Frame Extension subfields in the ETS control frame**

| Type (Type) value | Subtype value | Control Frame Extension value | Description |
|---|---|---|---|
| B3 B2 | B7 B6 B5 B4 | B11 B10 B9 B8 | |
| 01 | 0110 | 1101 | Extend TXOP Sharing |

A communications device to participate in the extend TXOP sharing operation is required to have a capability to perform the sharing operation. Whether a communications device has the capability to perform the extend TXOP sharing operation may be indicated by capabilities information. The capabilities information may be carried, for example, in an EHT MAC capabilities information field. The first frame mentioned above is used as an example. The first frame may include capabilities information. The capabilities information is used to indicate that the first STA has a capability to perform the first sharing operation, and the capabilities information may be carried in the EHT MAC capabilities information field.

For example, the reserved bit B14 in the EHT MAC capabilities information field may be modified to an Extend TXOP Sharing Support field, to indicate whether a current device has an extend TXOP sharing capability. If an AP or a STA has the extend TXOP sharing capability, the Extend TXOP Sharing Support field in the modified EHT MAC capabilities information field is set to 1, to indicate support for the "extend TXOP sharing operation". Otherwise, this bit is set to 0, to indicate no support for the "extend TXOP sharing operation". FIG. 13 shows the modified EHT MAC capabilities information field, where B0 to B13 are existing capabilities fields, and B14 is a newly added extend TXOP sharing capabilities field (namely, Extend TXOP Sharing Support). Table 8 shows an example of an attribute value and meaning of the Extend TXOP Sharing Support field.

**Table 8 Description of the Extend TXOP Sharing Support field**

| Value | Meaning |
|---|---|
| 0 | A corresponding AP or STA does not have the extend TXOP sharing capability. |
| 1 | A corresponding AP or STA has the extend TXOP sharing capability. |

If the AP or the STA has the extend TXOP sharing capability, and the Extend TXOP Sharing Support field in the EHT MAC capabilities information field is set to 1, when the extend TXOP sharing operation is performed, it sets attributes of the Extend TXOP Sharing control field according to its own requirements.

As mentioned above, the extend TXOP sharing operation may be indicated based on a request from the first AP. FIG. 14 shows an example of performing the extend TXOP sharing operation based on a request from the first AP. Referring to FIG. 14, before the first STA transmits the first frame to the first AP, the first STA first receives a second frame transmitted by the first AP (step S1420). The second frame includes the first request, and the first request is used to request an extend TXOP sharing operation. For example, the second frame may include the Extend TXOP Sharing field described above. A same format may be used for the Extend TXOP Sharing field in the second frame and the Extend TXOP Sharing field in the first frame. A difference is that for the first AP, the Extend TXOP Sharing Grant/Extend TXOP Sharing Receive field is the Extend TXOP Sharing Receive subfield, and the first AP may set a value of the Extend TXOP Sharing Receive subfield to 1, to indicate that the first AP requests the first STA to perform the extend TXOP sharing operation.

As shown in FIG. 15, in some implementations, after the first STA transmits the first frame to the first AP, the first AP may transmit a third frame to the first STA (step S1520). The third frame includes acknowledgment information for the first sharing operation. For example, the third frame may include, for example, the Extend TXOP Sharing field described above. A same format may be used for the Extend TXOP Sharing field in the third frame and the Extend TXOP Sharing field in the first frame. A difference is that for the first AP, the Extend TXOP Sharing Grant/Extend TXOP Sharing Receive field is the Extend TXOP Sharing Receive subfield, and the first AP may set a value of the Extend TXOP Sharing Receive subfield to 1, to indicate that the first AP acknowledges execution of the extend TXOP sharing operation.

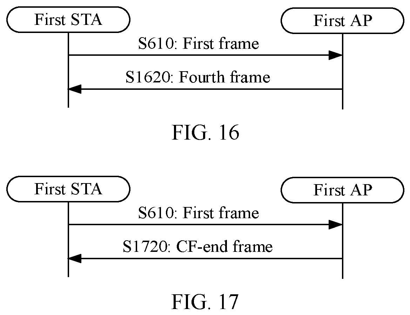

As shown in FIG. 16, in some implementations, after the first STA transmits the first frame to the first AP, the first AP may transmit a fourth frame to the first STA (step S1620). The fourth frame includes sixth information. The sixth information is used to indicate one or more of the following: ending the extend TXOP sharing operation, and returning the transmission resource to the first STA. For example, the fourth frame may include, for example, the Extend TXOP Sharing field described above. A same format may be used for the Extend TXOP Sharing field in the fourth frame and the Extend TXOP Sharing field in the first frame. A difference is that for the first AP, the Extend TXOP Sharing Grant/Extend TXOP Sharing Receive field is the Extend TXOP Sharing Receive subfield, and the first AP may set a value of the Extend TXOP Sharing Receive subfield to 0, to indicate that the first AP ends the extend TXOP sharing operation and returns the transmission resource to the first STA.

As shown in FIG. 17, in some implementations, after the first STA transmits the first frame to the first AP, the first AP may transmit a contention free-end (Contention Free-End, CF-End) frame to the first STA (step S1720), thereby directly indicating the end of the extend TXOP sharing operation.

The following describes embodiments of this application in more detail with reference to specific examples. It should be noted that the examples below are merely intended to assist those skilled in the art in understanding the embodiments of this application, but not intended to use specific values or specific scenarios in the examples to limit the embodiments of this application. Apparently, those skilled in the art may make various equivalent modifications or variations based on the examples illustrated below, and such modifications or variations also fall within the scope of embodiments of this application.

### Example 1: Restricted extend TXOP sharing mode

When an AP having the extend TXOP sharing capability performs UL data exchange with a STA having the extend TXOP sharing capability, the AP may actively request a restricted extend TXOP sharing operation and request a portion of transmission resource from the STA according to a transmission requirement of the AP. The STA may also actively initiate a restricted extend TXOP sharing operation and allocate a portion of transmission resource to the AP according to a transmission requirement of the STA. In the restricted extend TXOP sharing operation, the STA specifies a subsequent transmission requirement for the AP.

### 1.1 AP behavior

When an AP having the extend TXOP sharing capability performs UL data exchange with a STA having the extend TXOP sharing capability, if the AP expects the STA to perform a restricted extend TXOP sharing operation and requests a portion of transmission resource, it may transmit a frame carrying an Extend TXOP Sharing control field (hereinafter referred to as an ETS control field) to the STA, and the AP may set an attribute value of an Extend TXOP Sharing Mode subfield in an Extend TXOP Sharing Info subfield to 0 and set an attribute value of an Extend TXOP Sharing Receive subfield to 1, indicating that the AP requests the STA to perform a restricted extend TXOP sharing operation.

If the AP, after transmitting the frame carrying the ETS control field, or directly receives a frame containing an ETS control field from the STA, and an attribute value of an Extend TXOP Sharing Mode subfield in an Extend TXOP Sharing Info subfield is 0 and an attribute value of an Extend TXOP Sharing Grant subfield is 1, it indicates that the STA prepares to initiate a restricted extend TXOP sharing operation, and the AP parses and saves content of a Target User Info subfield. The AP replies to the STA with a frame carrying an ETS control field or an ETS control frame, and sets an attribute value of an Extend TXOP Sharing Mode subfield in an Extend TXOP Sharing Info subfield to 0 and sets an attribute value of an Extend TXOP Sharing Receive subfield to 1, indicating that the AP has successfully received an original TXOP transmission resource of the STA.

After completing the transmission of the acknowledgment frame, the AP is considered to have obtained the original TXOP transmission resource of the STA. In subsequent transmission processes, the AP is required to preferentially ensure a transmission requirement specified by the STA in the Target User Info subfield.

If the transmission of the frame carrying the ETS control field transmitted by the AP fails, or if the AP receives a data frame containing an ETS control field or an ETS control frame from the STA, and an attribute value of an Extend TXOP Sharing Mode subfield in the frame is 0 and an attribute value of an Extend TXOP Sharing Grant subfield is 0, it indicates that this request from the AP has failed.

After completing data transmission within the obtained TXOP, if the AP expects to return this portion of transmission resource to the original resource holder, it transmits a frame carrying an ETS control field to the original resource holder, namely, the STA, and the AP sets an attribute value of an Extend TXOP Sharing Mode subfield in the frame to 0 and sets an attribute value of an Extend TXOP Sharing Receive subfield to 0, indicating that remaining transmission resources are to be returned to the STA. Otherwise, the AP transmits a CF-end frame to directly indicate the end of the current TXOP.

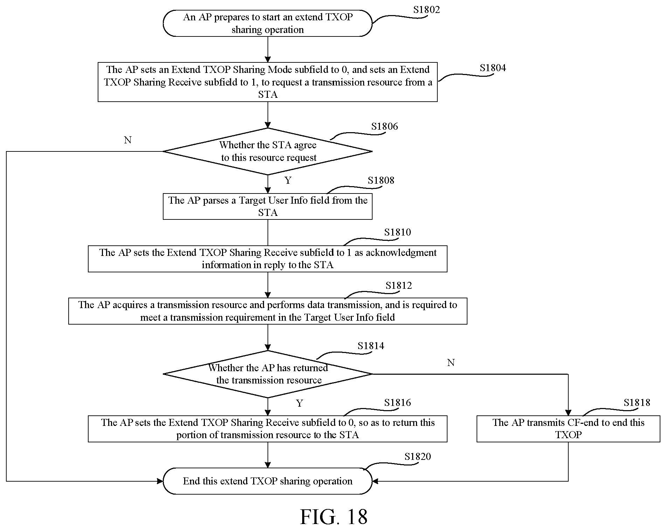

FIG. 18 is a flowchart of an operation in the restricted extend TXOP sharing mode. FIG. 18 is mainly illustrated from a perspective of the AP, and in FIG. 18, the extend TXOP sharing operation is initiated based on a request from the AP.

Referring to FIG. 18, in step S1802, the AP prepares to start an extend TXOP sharing operation.

In step S1804, the AP sets an Extend TXOP Sharing Mode subfield to 0, sets an Extend TXOP Sharing Receive subfield to 1, and requests a transmission resource from the STA.

In step S1806, whether the STA accepts this resource request is determined. If this resource request is not accepted, step S1820 is performed; and if this resource request is accepted, step S1808 is performed.

In step S1808, the AP parses a Target User Info field from the STA.

In step S1810, the AP sets the Extend TXOP Sharing Receive subfield to 1 as acknowledgment information in reply to the STA.

In step S1812, the AP obtains the transmission resource and performs data transmission. During the data transmission process, the AP is required to ensure that the data transmission process meets a transmission requirement specified in the Target User Info field.

In step S1814, the AP determines whether to return the transmission resource. If it is determined to return the transmission resource, step S1816 is performed; and if it is determined not to return the transmission resource, step S1818 is performed.

In step S1816, the AP sets the Extend TXOP Sharing Receive subfield to 0 and returns this portion of transmission resource to the STA.

In step S1818, the AP transmits a CF-end frame to end this TXOP.

In step S1820, this extend TXOP sharing operation is ended.

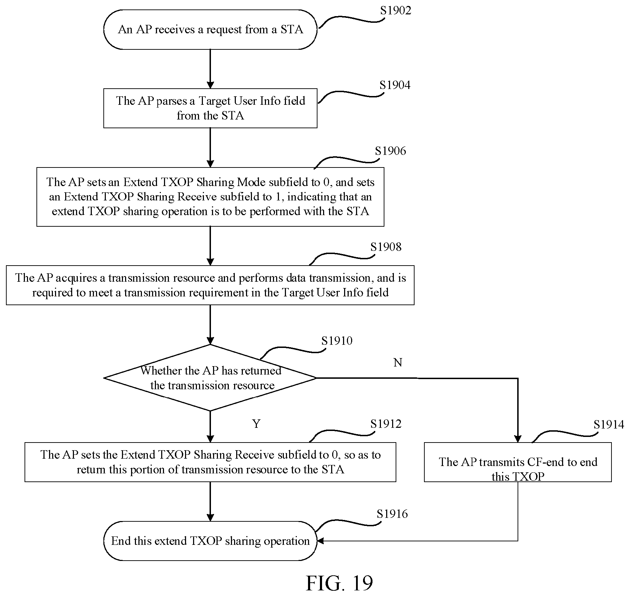

FIG. 19 is flowchart of another operation in the restricted extend TXOP sharing mode. FIG. 19 is mainly illustrated from a perspective of the AP, and in FIG. 19, the extend TXOP sharing operation is actively initiated by the STA.

In step S1902, the AP receives a request from the STA.

In step S1904, the AP parses a Target User Info field from the STA.

In step S1906, the AP sets an Extend TXOP Sharing Mode subfield to 0, and sets an Extend TXOP Sharing Receive subfield to 1, indicating that an extend TXOP sharing operation is to be performed with the STA.

In step S1908, the AP acquires a transmission resource and performs data transmission, and the data transmission is required to meet a transmission requirement in the Target User Info field.

In step S1910, the AP determines whether to return the transmission resource. If it is determined to return the transmission resource, step S1912 is performed; and if it is determined not to return the transmission resource, step S1914 is performed.

In step S1912, the AP sets the Extend TXOP Sharing Receive subfield to 0 and returns this portion of transmission resource to the STA.

In step S1914, the AP transmits a CF-end frame to end this TXOP.

In step S1916, this extend TXOP sharing operation is ended.

### 1.2 STA behavior

When a STA having the extend TXOP sharing capability performs UL data exchange with an AP having the extend TXOP sharing capability, if the STA expects the AP to perform a restricted extend TXOP sharing operation and grants a portion of transmission resource, or if the STA receives a frame containing an ETS control field from the AP, an attribute value of an Extend TXOP Sharing Mode subfield in the frame is set to 0, and an attribute value of an Extend TXOP Sharing Receive subfield is set to 1, the STA may reply with a data frame carrying an ETS control field or an ETS control frame, set an attribute value of an Extend TXOP Sharing Mode subfield in an Extend TXOP Sharing Info subfield to 0, and set an attribute value of an Extend TXOP Sharing Grant subfield to 1. In addition, the STA may set the Target User Info subfield based on its own transmission requirements. The above operations performed by the STA indicate that the STA is to perform a restricted extend TXOP sharing operation. Furthermore, the STA specifies, by using a Duration/ID field, usage duration of a transmission resource to be allocated to the AP.

If the STA receives a frame containing an ETS control field from the AP within a subsequent time period, and an attribute value of an Extend TXOP Sharing Mode subfield in the frame is 0 and an attribute value of an Extend TXOP Sharing Receive subfield is 0, remaining transmission resources are to be reclaimed. After sharing its own transmission resource with the AP, the STA adjusts its own working state according to its own situation, for example, adjusts its own power working mode.

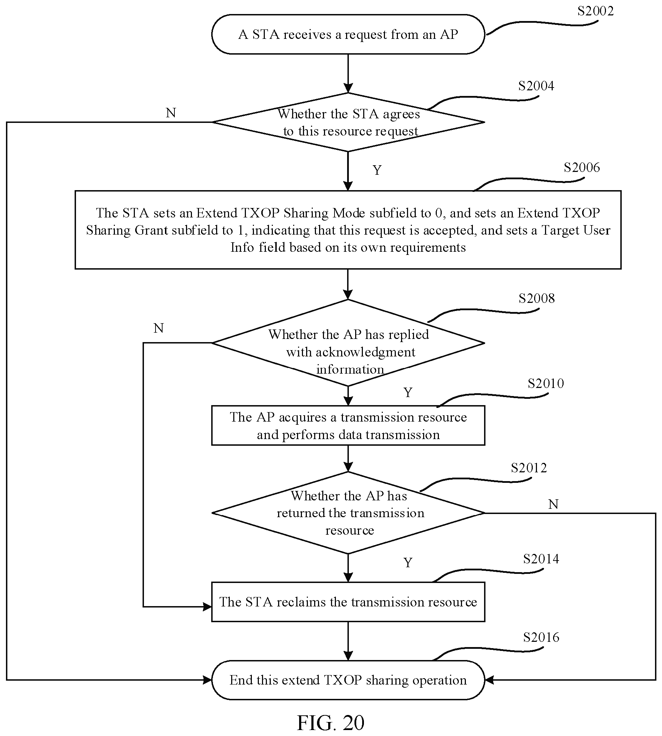

FIG. 20 is a flowchart of still another operation in the restricted extend TXOP sharing mode. FIG. 20 is mainly illustrated from a perspective of the STA, and in FIG. 20, the extend TXOP sharing operation is initiated based on a request from the AP.

Referring to FIG. 20, in step S2002, the STA receives a request from the AP.

In step S2004, the STA determines whether to agree to this resource request. If the STA agrees to this resource request, step S2006 is performed; and if the STA does not agree to this resource request, step S2016 is performed.

In step S2006, the STA sets an Extend TXOP Sharing Mode subfield to 0, and sets an Extend TXOP Sharing Grant subfield to 1, indicating that the STA accepts this request. In addition, the STA sets a Target User Info field based on its own requirements.

In step S2008, whether the AP has replied with acknowledgment information is determined. If the AP has replied with an acknowledgment message, step S2010 is performed; and if the AP has not replied with an acknowledgment message, step S2014 is performed.

In step S2010, the AP acquires a transmission resource and performs data transmission.

In step S2012, whether the AP has returned the transmission resource is determined. If the AP has returned the transmission resource, step S2014 is performed; and if the AP has not returned the transmission resource, step S2016 is performed.

In step S2014, the STA reclaims the transmission resource.

In step S2016, this extend TXOP sharing operation is ended.

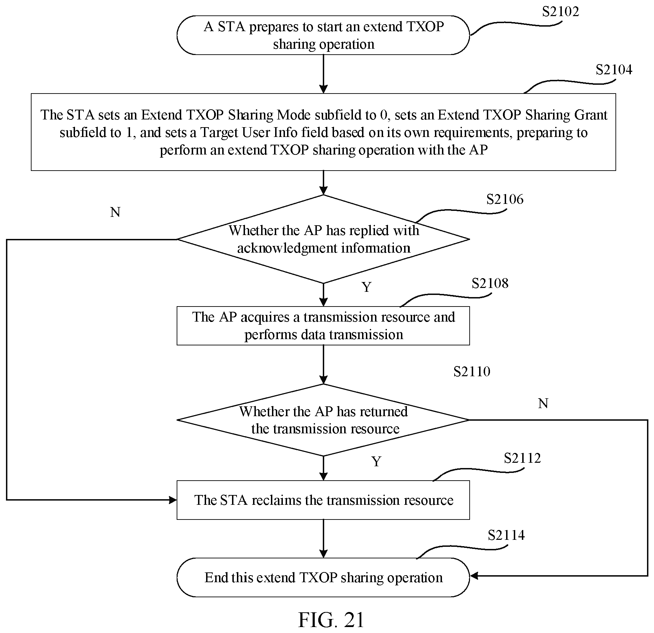

FIG. 21 is a flowchart of still another operation in the restricted extend TXOP sharing mode. FIG. 21 is mainly illustrated from a perspective of the STA, and in FIG. 21, the extend TXOP sharing operation is actively initiated by the STA.

Referring to FIG. 21, in step S2102, the STA prepares to start an extend TXOP sharing operation.

In step S2104, the STA sets an Extend TXOP Sharing Mode subfield to 0, sets an Extend TXOP Sharing Grant subfield to 1, and sets a Target User Info field based on its own requirements, preparing to perform an extend TXOP sharing operation with the AP.

In step S2106, whether the AP replies with acknowledgment information is determined. If the AP has not replied with acknowledgment information, step S2112 is performed; and if the AP has replied with acknowledgment information, step S2108 is performed.

In step S2108, the AP acquires a transmission resource and performs data transmission.

In step S2110, whether the AP has returned the transmission resource is determined. If it is determined to return the transmission resource, step S2112 is performed; and if it is determined not to return the transmission resource, step S2114 is performed.

In step S2112, the STA reclaims the transmission resource.

In step S2114, this extend TXOP sharing operation is ended.

### 1.3 Scenario examples

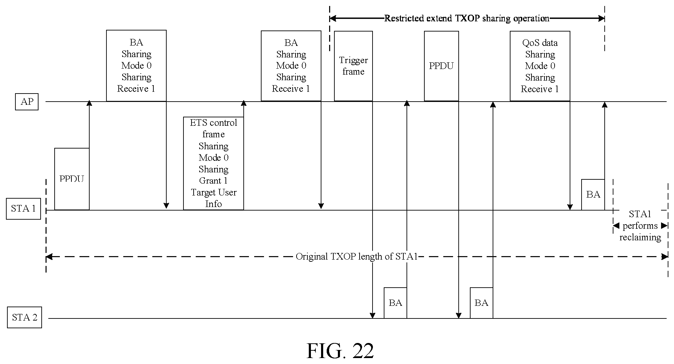

FIG. 22 shows a scenario where the AP successfully requests a transmission resource from a STA 1 and performs DL data transmission. In the scenario shown in FIG. 22, the STA 1 performs information exchange by using an ETS control frame. The AP is performing UL data transmission with the STA 1, both of them have the extend TXOP sharing capability, and in this case, bursty low-latency traffic that is required to be transmitted to a STA 2 occurs at the AP (this low-latency traffic is related to a service of the STA 1). The AP actively initiates a restricted extend TXOP sharing operation request to the STA 1. The STA 1 replies with an ETS control frame and requires, in a Target User Info field, the AP to perform data exchange with the STA 2. The AP performs DL data exchange with the STA 2 within acquired transmission time. After completing the data exchange, the AP returns the transmission resource to the STA 1.

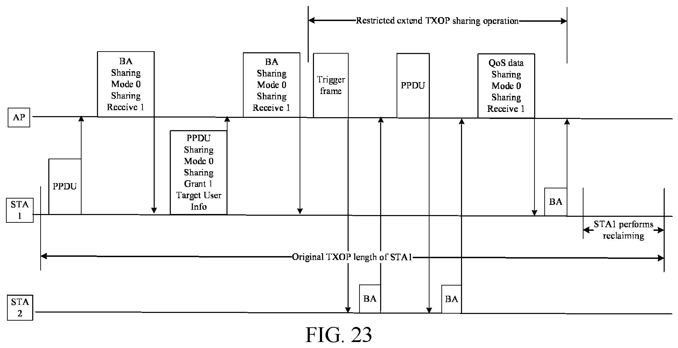

FIG. 23 shows a scenario where the AP successfully requests a transmission resource from a STA 1 and performs DL data transmission. The AP is performing UL data transmission with the STA 1, both of them have the extend TXOP sharing capability, and in this case, bursty low-latency traffic that is required to be transmitted to a STA 2 occurs at the AP (this low-latency traffic is related to a service of the STA 1). The AP actively initiates a restricted extend TXOP sharing operation request to the STA 1. The STA 1 requires, in a Target User Info field, the AP to perform data exchange with the STA 2. The AP performs DL data exchange with the STA 2 within acquired transmission time. After completing the data exchange, the AP returns the transmission resource to the STA 1.

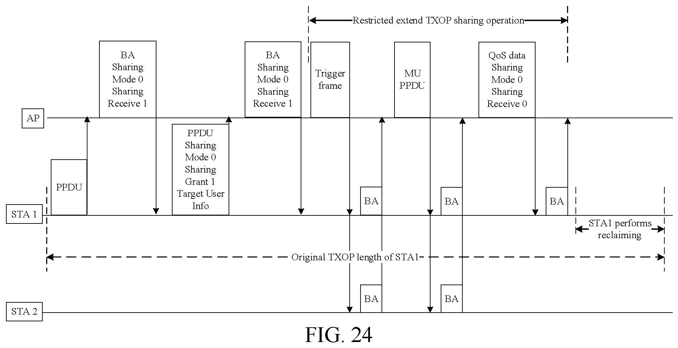

FIG. 24 shows a scenario where the AP successfully requests a transmission resource from a STA 1 and performs MU DL data transmission. The AP is performing UL data transmission with the STA 1, both of them have the extend TXOP sharing capability, and in this case, bursty low-latency traffic to be transmitted to a STA 2 occurs at the AP (this low-latency traffic is related to a service of the STA 1). The AP actively initiates a restricted extend TXOP sharing operation request to the STA 1. The STA 1 requires, in a Target User Info field, the AP to perform data exchange with the STA 2. The AP preferentially ensures DL data exchange with the STA 2 within acquired transmission time, and performs DL data exchange with the STA 1 by using remaining transmission resources. After completing the data exchange, the AP returns the transmission resource to the STA 1.

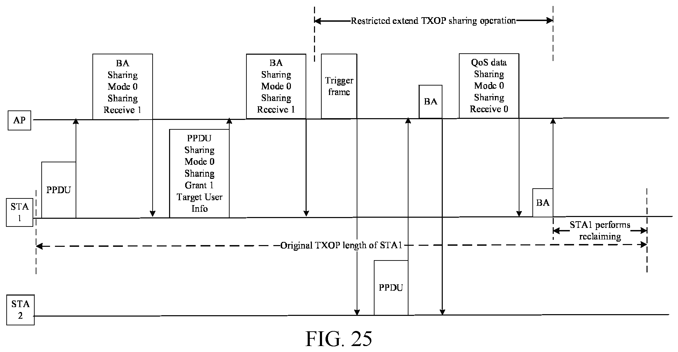

FIG. 25 shows a scenario where the AP successfully requests a transmission resource from a STA 1 and performs UL data transmission. The AP is performing UL data transmission with the STA 1, both of them have the extend TXOP sharing capability, and in this case, the AP is required to query whether a STA 2 has bursty low-latency traffic. The AP actively initiates a restricted extend TXOP sharing operation request to the STA 1. The STA 1 requires, in a Target User Info field, the AP to perform data exchange with the STA 2. The AP performs UL data exchange with the STA 2 within acquired transmission time. After completing the data exchange, the AP returns the transmission resource to the STA 1.

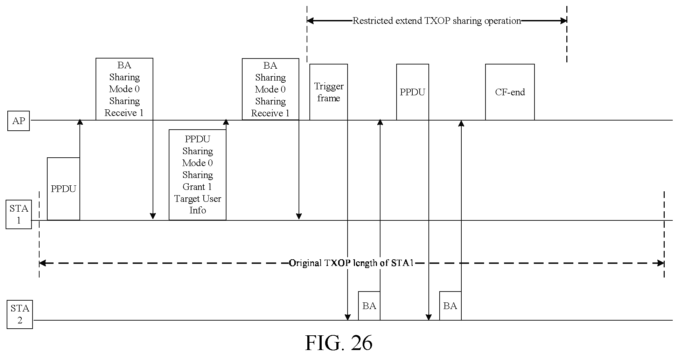

FIG. 26 shows a scenario where the AP successfully requests a transmission resource from a STA 1 and performs DL data transmission. The AP is performing UL data transmission with the STA 1, both of them have the extend TXOP sharing capability, and in this case, bursty low-latency traffic to be transmitted to a STA 2 occurs at the AP (this low-latency traffic is related to a service of the STA 1). The AP actively initiates a restricted extend TXOP sharing operation request to the STA 1. The STA 1 requires, in a Target User Info field, the AP to perform data exchange with the STA 2, and the AP performs DL data exchange with the STA 2 within acquired transmission time. After completing the data exchange, the AP transmits a CF-end frame to end the current TXOP, and the STA 1 does not reclaim the transmission resource.

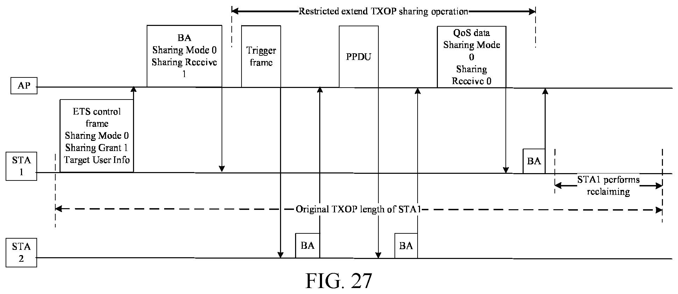

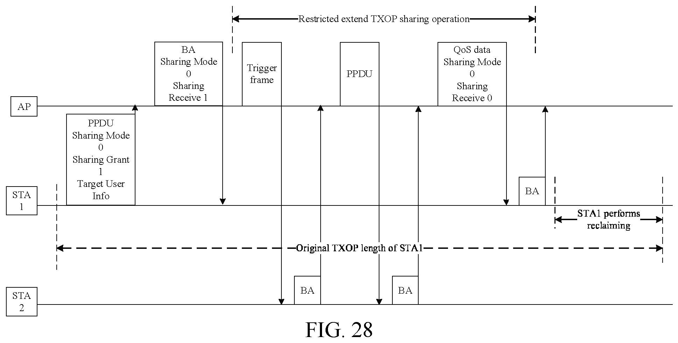

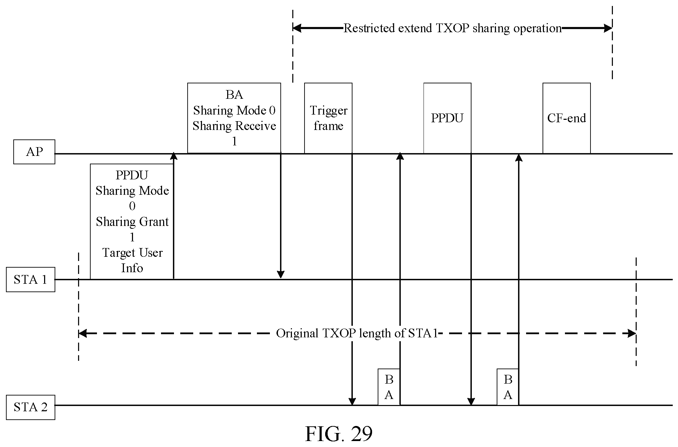

FIG. 27, FIG. 28, and FIG. 29 each show a scenario where the STA 1 allocates a transmission resource to the AP and the AP performs DL data transmission. The AP is performing UL data transmission with the STA 1, both of them have the extend TXOP sharing capability, and in this case, the STA 1 expects the AP to assist a STA 2 in completing a low-latency traffic management operation (this low-latency traffic is related to a service of the STA 1). The STA 1 actively initiates a restricted extend TXOP sharing operation to the AP. The STA 1 requires, in a Target User Info field, the AP to perform data exchange with the STA 2. The AP performs DL data exchange with the STA 2 within acquired transmission time. FIG. 27 shows a scenario where the STA actively initiates an extend TXOP sharing operation by using an ETS control frame. FIG. 28 shows a scenario where the AP returns a transmission resource to the STA 1 after completing data exchange. FIG. 29 shows a scenario where the AP transmits a CF-end frame to end the current TXOP, and the STA 1 does not reclaim the transmission resource.

### Example 2: Non-restricted extend TXOP sharing mode

When an AP having the extend TXOP sharing capability performs UL data exchange with a STA having the extend TXOP sharing capability, the AP may actively request a non-restricted extend TXOP sharing operation and request a portion of transmission resource from the STA according to a transmission requirement of the AP. The STA may also actively initiate a non-restricted extend TXOP sharing operation and allocate a portion of transmission resource to the AP according to a transmission requirement of the STA. In the non-restricted extend TXOP sharing operation, the STA does not specify a subsequent transmission requirement for the AP.

### 2.1 AP behavior

When an AP having the extend TXOP sharing capability performs UL data exchange with a STA having the extend TXOP sharing capability, if the AP expects the STA to perform a non-restricted extend TXOP sharing operation and requests a portion of transmission resource, it may transmit a frame carrying an Extend TXOP Sharing control field to the STA, and the AP may set an attribute value of an Extend TXOP Sharing Mode subfield to 1 and set an attribute value of an Extend TXOP Sharing Receive subfield to 1, indicating that the AP requests the STA to perform a non-restricted extend TXOP sharing operation.

If the AP, after transmitting the frame carrying the ETS control field (or directly receives) a data frame containing an ETS control field or an ETS control frame from the STA, and an attribute value of an Extend TXOP Sharing Mode subfield in the frame is 1 and an attribute value of an Extend TXOP Sharing Grant subfield is 1, it indicates that the STA prepares to initiate a non-restricted extend TXOP sharing operation. The AP replies to the STA with a frame carrying an ETS control field, and the AP sets an attribute value of an Extend TXOP Sharing Mode subfield in the frame to 1 and sets an attribute value of an Extend TXOP Sharing Receive subfield to 1, indicating that the AP has successfully received a transmission resource held by the STA.

After completing the transmission of the frame for acknowledgment, the AP is considered to have obtained the TXOP transmission resource held by the STA.

If the transmission of the frame carrying the ETS control field transmitted by the AP fails, or if the AP receives a data frame containing an ETS control field or an ETS control frame from the STA, and an attribute value of an Extend TXOP Sharing Mode subfield in the frame is 1 and an attribute value of an Extend TXOP Sharing Grant subfield is 0, it indicates that this request from the AP has failed.

After completing data transmission within acquired transmission time, if the AP expects to return this portion of transmission resource to the original resource holder, it transmits a frame carrying an ETS control field to the original resource holder, namely, the STA, and the AP sets an attribute value of an Extend TXOP Sharing Mode subfield in the frame to 1 and sets an attribute value of an Extend TXOP Sharing Receive subfield to 0, indicating that remaining transmission resources are to be returned to the STA. Otherwise, the AP transmits a CF-end frame to directly indicate the end of the current TXOP.

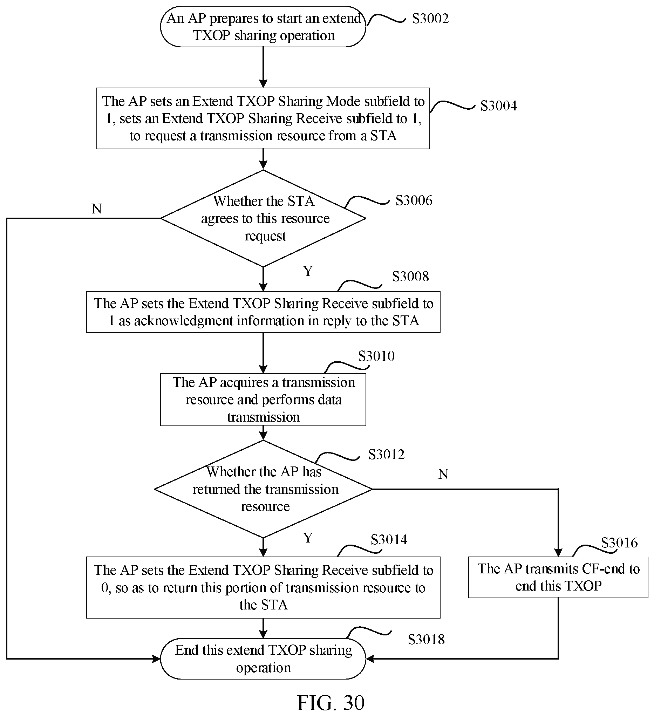

FIG. 30 is a flowchart of an operation in the non-restricted extend TXOP sharing mode. FIG. 30 is mainly illustrated from a perspective of the AP, and in FIG. 30, the extend TXOP sharing operation is initiated based on a request from the AP.

Referring to FIG. 30, in step S3002, the AP prepares to start an extend TXOP sharing operation.

In step S3004, the AP sets an Extend TXOP Sharing Mode subfield to 1, and sets an Extend TXOP Sharing Receive subfield to 1, to request a transmission resource from the STA.

In step S3006, whether the STA agrees to this resource request is determined. If the STA agrees to this resource request, step S3008 is performed; and if the STA does not agree to this resource request, step S3018 is performed.

In step S3008, the AP sets the Extend TXOP Sharing Receive subfield to 1 as acknowledgment information in reply to the STA.

In step S3010, the AP acquires a transmission resource and performs data transmission.

In step S3012, the AP determines whether to return the transmission resource. If it is determined to return the transmission resource, step S3014 is performed; and if it is determined not to return the transmission resource, step S3016 is performed.

In step S3014, the AP sets the Extend TXOP Sharing Receive subfield to 0, so as to return this portion of transmission resource to the STA.

In step S3016, the AP transmits a CF-end frame to end this TXOP.

In step S3018, this extend TXOP sharing operation is ended.

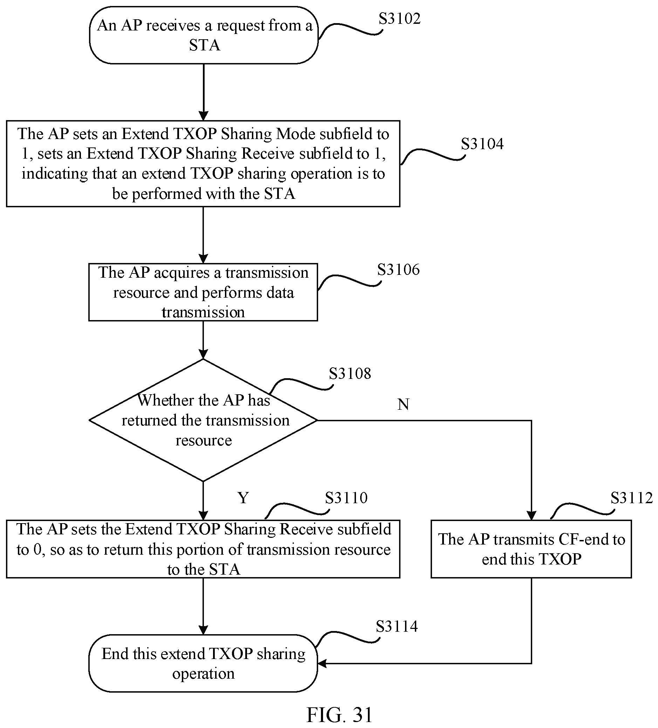

FIG. 31 is flowchart of another operation in the non-restricted extend TXOP sharing mode. FIG. 31 is mainly illustrated from a perspective of the AP, and in FIG. 31, the extend TXOP sharing operation is actively initiated by the STA.

Referring to FIG. 31, in step S3102, the AP receives a request from the STA.

In step S3104, the AP sets an Extend TXOP Sharing Mode subfield to 1, and sets an Extend TXOP Sharing Receive subfield to 1, indicating that an extend TXOP sharing operation is to be performed with the STA.

In step S3106, the AP acquires a transmission resource and performs data transmission.

In step S3108, the AP determines whether to return the transmission resource. If it is determined to return the transmission resource, step S3110 is performed; and if it is determined not to return the transmission resource, step S3112 is performed.

In step S3110, the AP sets the Extend TXOP Sharing Receive subfield to 0, so as to return this portion of transmission resource to the STA.

In step S3112, the AP transmits a CF-end frame to end this TXOP.

In step S3114, this extend TXOP sharing operation is ended.

### 2.2 STA behavior

When a STA having the extend TXOP sharing capability performs UL data exchange with an AP having the extend TXOP sharing capability, if the STA expects the AP to perform a non-restricted extend TXOP sharing operation and grants a portion of transmission resource, or if the STA receives a frame containing an ETS control field from the AP, an attribute value of an Extend TXOP Sharing Mode subfield in the frame is 1, and an attribute value of an Extend TXOP Sharing Receive subfield is 1, the STA may reply with a data frame carrying an ETS control field or an ETS control frame, set an attribute value of an Extend TXOP Sharing Mode subfield in the frame to 1, and set an attribute value of an Extend TXOP Sharing Grant subfield to 1, indicating that the STA is to perform a non-restricted extend TXOP sharing operation. The STA specifies, by using a Duration/ID field, usage duration of a transmission resource to be allocated to the AP.

If the STA subsequently receives a frame containing an ETS control field from the AP, and an attribute value of an Extend TXOP Sharing Mode subfield in the frame is 1 and an attribute value of an Extend TXOP Sharing Receive subfield is 0, the STA is to reclaim remaining transmission resources. After sharing its own transmission resource with the AP, the STA adjusts its own working state according to its own situation.

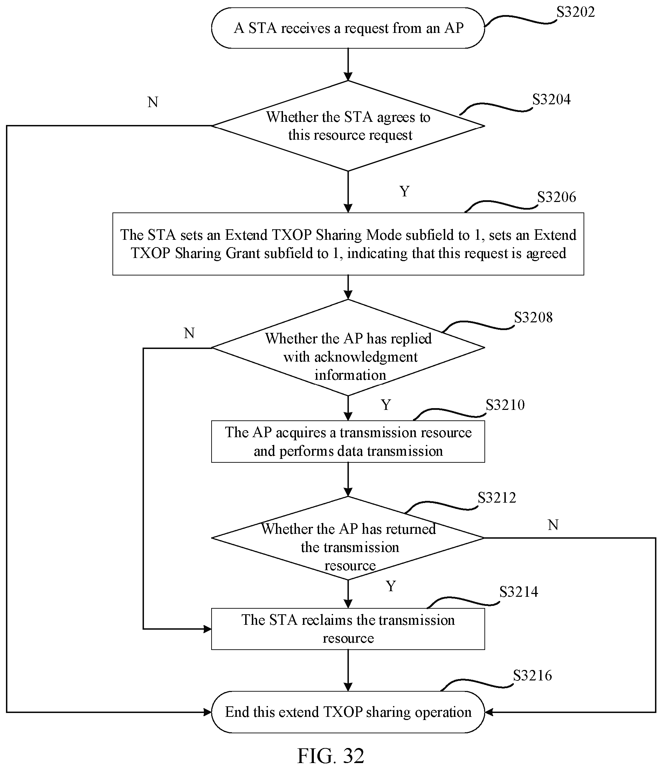

FIG. 32 is a flowchart of still another operation in the non-restricted extend TXOP sharing mode. FIG. 32 is mainly illustrated from a perspective of the STA, and in FIG. 32, the extend TXOP sharing operation is initiated based on a request from the AP.

Referring to FIG. 32, in step S3202, the STA receives a request from the AP.

In step S3204, the STA determines whether to agree to this resource request. If this resource request is agreed, step S3206 is performed; and if this resource request is not agreed, step S3216 is performed.

In step S3206, the STA sets an Extend TXOP Sharing Mode subfield to 1, and sets an Extend TXOP Sharing Grant subfield to 1, indicating that this request is agreed.

In step S3208, whether the AP has replied with acknowledgment information is determined. If acknowledgment information is returned, step S3210 is performed; and if no acknowledgment information is returned, step S3214 is performed.

In step S3210, the AP acquires a transmission resource and performs data transmission.

In step S3212, whether the AP has returned the transmission resource is determined. If the transmission resource has been returned, step S3214 is performed; and if the transmission resource has not been returned, step S3216 is performed.

In step S3214, the STA reclaims the transmission resource.

In step S3216, this extend TXOP sharing operation is ended.

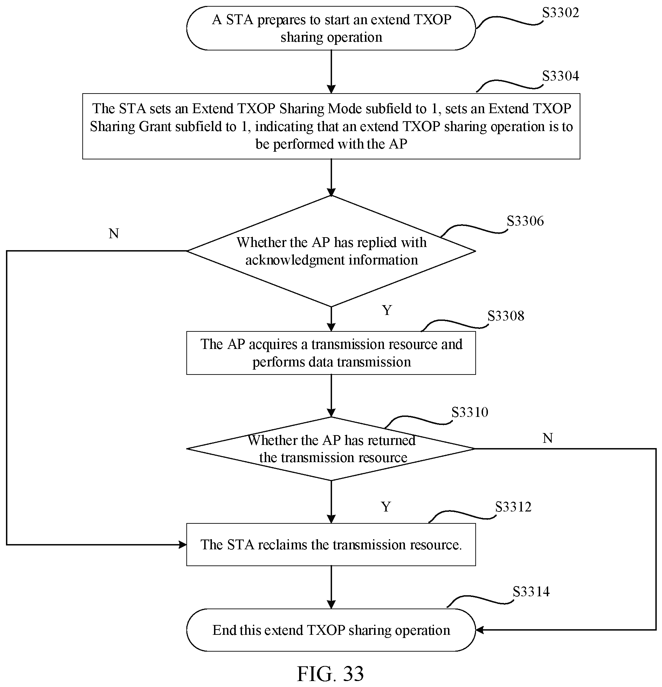

FIG. 33 is a flowchart of still another operation in the non-restricted extend TXOP sharing mode. FIG. 33 is mainly illustrated from a perspective of the STA, and in FIG. 33, the extend TXOP sharing operation is actively initiated by the STA.

Referring to FIG. 33, in step S3302, the STA prepares to start an extend TXOP sharing operation.

In step S3304, the STA sets an Extend TXOP Sharing Mode subfield to 1, and sets an Extend TXOP Sharing Grant subfield to 1, indicating that an extend TXOP sharing operation is to be performed with the AP.

In step S3306, whether the AP has replied with acknowledgment information is determined. If an acknowledgment message is returned, step S3308 is performed; and if no acknowledgment message is returned, step S3312 is performed.

In step S3308, the AP acquires a transmission resource and performs data transmission.

In step S3310, whether the AP has returned the transmission resource is determined. If the transmission resource has been returned, step S3312 is performed; and if the transmission resource has not been returned, step S3314 is performed.

In step S3312, the STA reclaims the transmission resource.

In step S3314, this extend TXOP sharing operation is ended.

### 2.3 Scenario examples

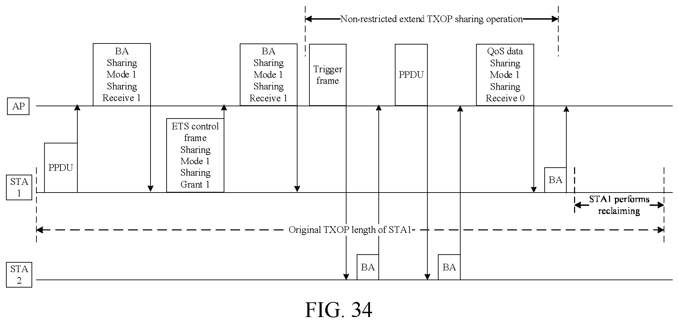

FIG. 34 shows a scenario where the AP successfully requests a transmission resource from a STA 1 and performs DL data transmission. In the scenario shown in FIG. 34, the STA 1 performs information exchange by using an ETS control frame. The AP is performing UL data transmission with the STA 1, both of them have the extend TXOP sharing capability, and in this case, bursty low-latency traffic to be transmitted to a STA 2 occurs at the AP. The AP actively initiates a non-restricted extend TXOP sharing operation request to the STA 1. The AP may perform DL data transmission (for example, performing DL data exchange with a STA 2 in this scenario) within acquired transmission time according to its own requirements. After completing the data exchange, the AP returns the transmission resource to the STA 1.

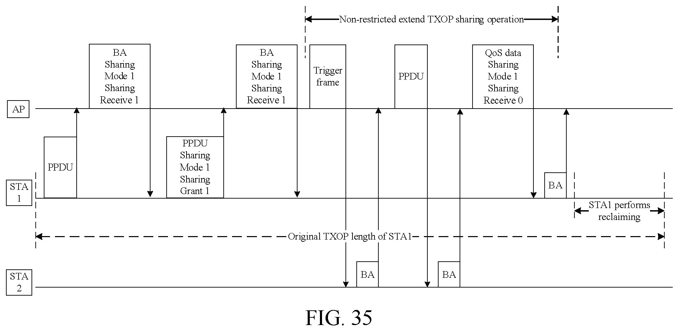

FIG. 35 shows a scenario where the AP successfully requests a transmission resource from a STA 1 and performs DL data transmission. The AP is performing UL data transmission with the STA 1, both of them have the extend TXOP sharing capability, and in this case, bursty low-latency traffic to be transmitted to a STA 2 occurs at the AP. The AP actively initiates a non-restricted extend TXOP sharing operation request to the STA 1. The AP may perform DL data transmission (for example, performing DL data exchange with a STA 2 in this scenario) within acquired transmission time according to its own requirements. After completing the data exchange, the AP returns the transmission resource to the STA 1.

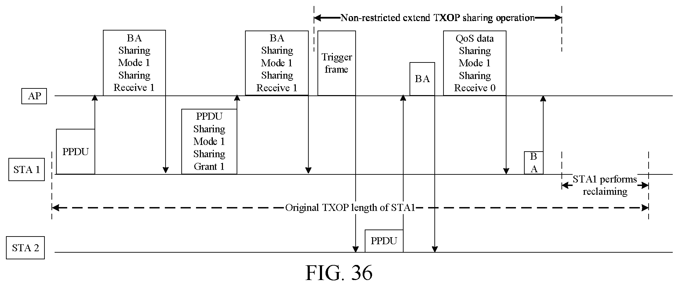

FIG. 36 shows a scenario where the AP successfully requests a transmission resource from a STA 1 and performs UL data transmission. The AP is performing UL data transmission with the STA 1, both of them have the extend TXOP sharing capability, and in this case, the AP is required to query whether the STA 2 has bursty low-latency traffic. The AP actively initiates a non-restricted extend TXOP sharing operation request to the STA 1. The AP may perform UL data transmission within acquired transmission time according to its own requirements. After completing the data exchange, the AP returns the transmission resource to the STA 1.

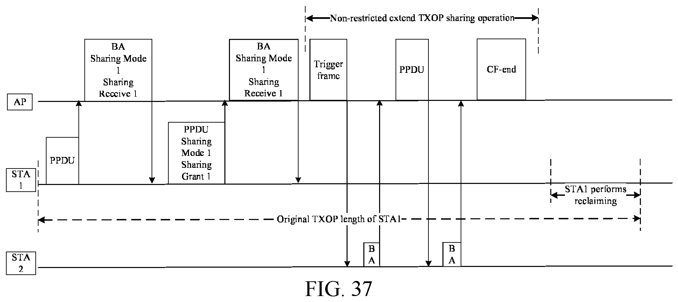

FIG. 37 shows a scenario where the AP successfully requests a transmission resource from a STA 1 and performs DL data transmission. The AP is performing UL data transmission with the STA 1, both of them have the extend TXOP sharing capability, and in this case, bursty low-latency traffic to be transmitted to a STA 2 occurs at the AP. The AP actively initiates a non-restricted extend TXOP sharing operation request to the STA 1. The AP may perform DL data transmission within acquired transmission time according to its own requirements. After completing the data exchange, the AP transmits a CF-end frame to end the current TXOP, and the STA 1 does not reclaim the transmission resource.

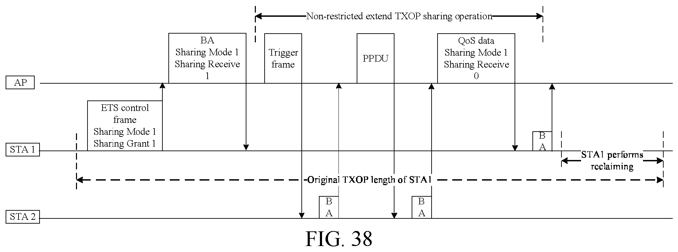

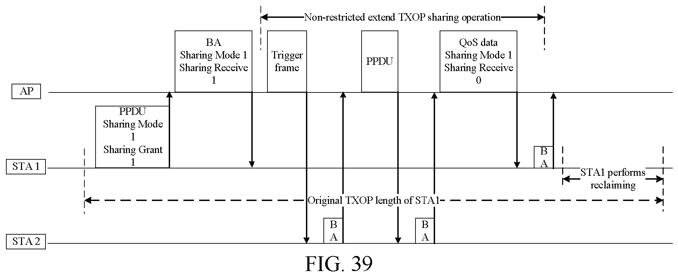

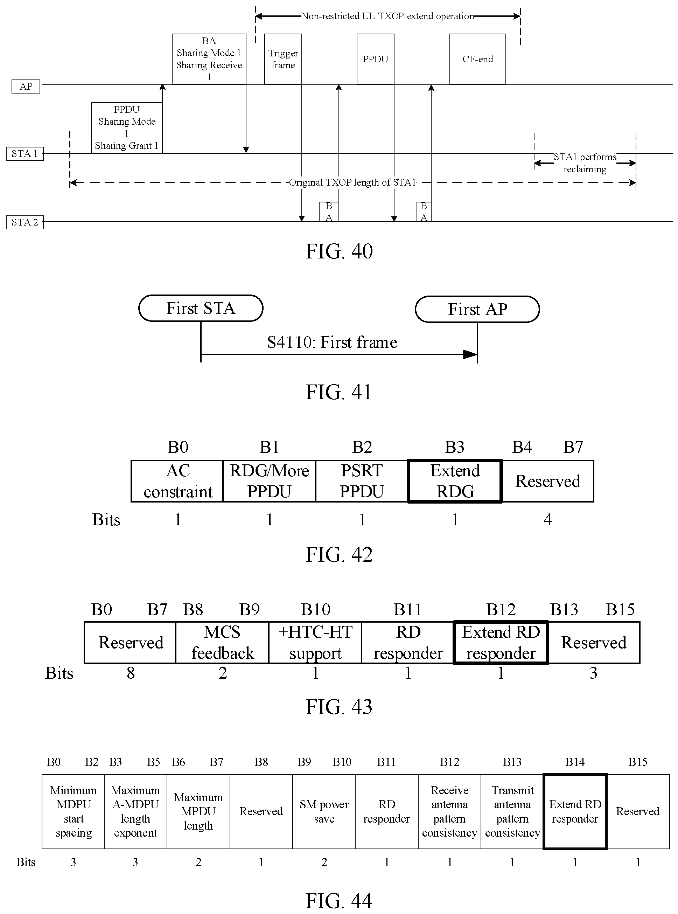

FIG. 38, FIG. 39, and FIG. 40 each show a scenario where the STA 1 allocates a transmission resource to the AP and the AP performs DL data transmission. The AP is performing UL data transmission with the STA 1, and both of them have the extend TXOP sharing capability. In this case, the STA 1 expects the AP to assist a STA 2 in completing a low-latency traffic management operation (this low-latency traffic is related to a service of the STA 1). The STA 1 actively initiates a non-restricted extend TXOP sharing operation to the AP. The AP may perform DL data transmission (performing DL data exchange with a STA 2 in this scenario) within acquired transmission time according to its own requirements. FIG. 38 shows a scenario where the STA actively initiates a non-restricted TXOP sharing operation by using an ETS control frame. FIG. 39 shows a scenario where the AP returns a transmission resource to the STA 1 after completing data exchange. FIG. 40 shows a scenario where the AP transmits a CF-end frame to end the current TXOP, and the STA 1 does not reclaim the transmission resource.

### Embodiment 2: first RD transmission

In the RD transmission protocol provided in related technologies, when a STA (such as a non-AP STA) holding a transmission resource performs RD transmission with an AP, the data transmission of the AP is required to satisfy the following rules:
a) A subsequent communication object of the AP must include a STA holding a transmission resource.
b) When the AP performs RD transmission, if the AP completes data exchange with the original transmission resource holder or transmits acknowledgment information, the original transmission resource holder, namely, the STA, ends this RD transmission process.

It may be learned that in the original RD transmission protocol, transmission authority obtained by the AP from the STA is very limited. The limitations of the transmission authority are reflected in two aspects: one is the communication target (the AP must perform data communication with a STA holding a transmission resource), and the other is duration of the RD transmission (the RD transmission is ended when acknowledgment information appears). To meet application requirements in a plurality of scenarios (such as network management, low-latency service handling, and the like), the AP is required to have more transmission authority and/or transmission resources during RD transmission to achieve expected transmission objectives.

Based on the above considerations, the RD transmission protocol is extended or enhanced in Embodiment 2 to support the first RD transmission. The first RD transmission may also be referred to as extend RD transmission or enhanced RD transmission. In Embodiment 2, the first RD transmission, the extend RD transmission, and the enhanced RD transmission may be used interchangeably. The following mainly uses the extend RD transmission as an example for description.

In some implementations, the extend RD transmission may enhance RD transmission based on one or more of the following methods:
a) The extend RD transmission supports the first AP in initiating target transmission based on a transmission resource held by the first STA, where a target communications device participating in the target transmission may include the first STA, or may not include the first STA. In other words, the first AP may perform data transmission according to its own requirements, and is not required to communicate with the original transmission resource holder.
b) The extend RD transmission does not attach any additional end rules. In other words, during the extend RD transmission process, even if the first AP transmits acknowledgment information, it does not necessarily mean the end of this extend RD transmission.
c) If the first AP completes data exchange before the end of time specified for the extend RD transmission, it may return the current transmission resource to the first STA by using an explicit notification.

The extend RD transmission may enable the AP to have a more flexible data transmission manner to meet requirements of low-latency service transmission, network management, and the like in a plurality of scenarios.

An implementation of Embodiment 2 is described in more detail below from perspectives of communication frame design and information exchange by using examples.

Referring to FIG. 41, the first STA transmits a first frame to the first AP (step S4110). The first frame includes first information. The first information is used to indicate that the first STA has initiated extend RD transmission. Alternatively, the first information contains information related to the extend RD transmission. Alternatively, the first information is used to carry management information during the extend RD transmission.

The first information is carried in a CAS control field. For example, the bit B3 of a control information subfield in the CAS control field is set to "extend reserve direction grant (extend reserve direction grant, Extend RDG)". FIG. 42 is an example diagram of a specific format of the modified CAS control field. Table 9 shows values and meanings of "Extend RDG".

**Table 9 Values and meanings of "Extend RDG"**

| Value | Meaning upon transmission by the STA | Meaning upon transmission by the AP |
|---|---|---|
| 0 | No practical meaning | Ending the current extend RD transmission procedure and returning the transmission resource to the STA. |
| 1 | Initiating an extend RD transmission procedure | Accepting an extend RD transmission procedure initiated by a peer end. |

The first STA and/or the first AP may be communications devices having an extend RD transmission capability. The first STA and/or the first AP may indicate, by using capabilities information, whether they have the extend RD transmission capability. For example, the first frame in FIG. 41 includes ninth information, and the ninth information is used to indicate that the first STA has a capability to perform first reverse direction transmission. The ninth information may be carried in an HT extended capabilities (HT Extended Capabilities) field and/or an HE 6GHz capabilities (HE 6GHz Capabilities) field. For example, the bit B12 of the HT Extended Capabilities field and the bit B14 of the capabilities information (Capabilities Information) field in the HE 6GHz Capabilities field may be set to "Extend RD Responder" to indicate whether a communications device has the extend RD transmission capability. If the communications device has the extend RD transmission capability, the Extend RD Responder field may be set to 1. Otherwise, the Extend RD Responder field may be set to 0. FIG. 43 and FIG. 44 each show an example of the modified HT Extended Capabilities field and the HE 6GHz Capabilities field.

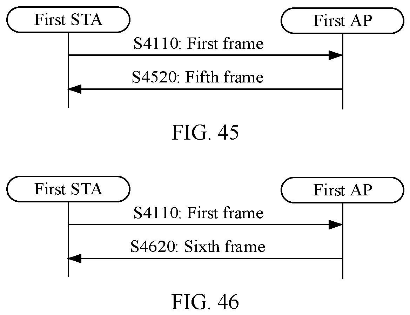

Referring to FIG. 45, in some implementations, after transmitting the first frame, the first AP transmits a fifth frame to the first STA (step S4520). The fifth frame contains acknowledgment information (that is, accepting the extend RD transmission procedure initiated by the peer end) for the first reverse direction transmission. For example, the fifth frame may include the Extend RDG field mentioned above, and a value of the Extend RDG field may be set to 1.

Referring to FIG. 46, in some implementations, after transmitting the first frame, the first AP transmits a sixth frame to the first STA (step S4620). The sixth frame includes eighth information. The eighth information is used to indicate one or more of the following: ending the first reverse direction transmission, and returning the transmission resource to the first STA. For example, the sixth frame may include the Extend RDG field mentioned above, and a value of the Extend RDG field may be set to 0.

In some implementations, the first AP obtains only part of the transmission authority of the transmission resource during the extend RD transmission process. As a result, the first AP is not allowed use a CF-end frame to end the TXOP.

In some implementations, if a legacy STA (legacy STA) does not support extend RD transmission, it can still perform data transmission by using the RD transmission method provided in related technologies.

The following describes embodiments of this application in more detail with reference to specific examples. It should be noted that the examples below are merely intended to assist those skilled in the art in understanding the embodiments of this application, but not intended to use specific values or specific scenarios in the examples to limit the embodiments of this application. Apparently, those skilled in the art may make various equivalent modifications or variations based on the examples illustrated below, and such modifications or variations also fall within the scope of embodiments of this application.

### Example 3:

This example proposes extend RD transmission. Through extend RD transmission, a STA may temporarily transfer its own transmission resource to an AP. The AP may perform DL or UL data transmission by using this portion of transmission resource. Devices supporting this scheme are referred to as devices having the "extend RD transmission capability". If a device has extend RD transmission functionality, it may indicate this in its capabilities information.

When a STA having the extend RD transmission capability performs UL data transmission with an AP having the extend RD transmission capability, a transmission resource may be temporarily transferred to the AP by using the scheme provided in this example. After acquiring this portion of transmission resource, the AP performs data transmission according to its own requirements. After completing the data transmission, the AP is required to return the transmission authority to the original STA.

When a STA having the extend RD transmission functionality performs UL data exchange with an AP having the extend RD transmission functionality, if the STA expects the AP to perform extend RD transmission and grants a portion of transmission resource, the STA may transmit a frame carrying a CAS control field, and sets an attribute value of an Extend RDG field in the CAS control field to 1, indicating that the STA is to perform extend RD transmission. The STA may specify, by using a Duration/ID field, transmission duration to be allocated to the AP.

If the AP having the extend RD transmission functionality receives a frame containing a CAS control field from the STA, and an attribute value of an Extend RDG field in the CAS control field is set to 1, it indicates that the STA prepares to perform an extend RD transmission operation. The AP replies to the STA with a frame carrying a CAS control field, and sets an attribute value of an Extend RDG field in the CAS control field to 1, indicating that the AP has successfully received a transmission resource indicated by the STA. After completing the transmission of the frame for acknowledgment, the AP is considered to have obtained the transmission resource of the STA.

If the AP completes data transmission before the end of acquired transmission time, the AP should return this portion of transmission resource to the original resource holder, and the AP transmits a frame carrying a CAS control field to the original resource holder, namely, the STA, and sets an attribute value of an Extend RDG field in the CAS control field to 1. Otherwise, the AP continues to transmit data until the acquired transmission time ends, and the STA reclaims the transmission resource. The AP is not allowed to transmit CF-end to end the current transmission resource.

### Operation procedure of the STA

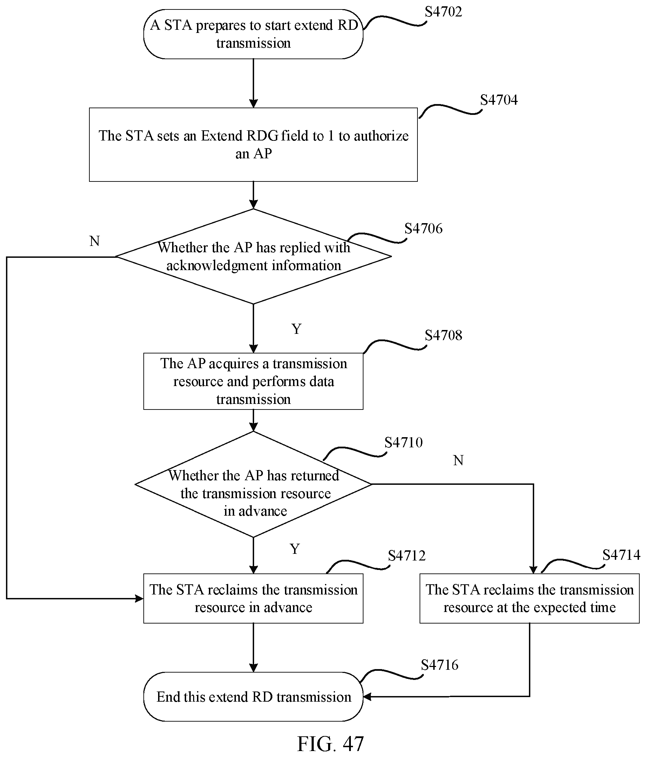

FIG. 47 is a flowchart of an operation of extend RD transmission. FIG. 47 is mainly illustrated from a perspective of the STA.

Referring to FIG. 47, in step S4702, the STA prepares to start extend RD transmission.

In step S4704, the STA sets an Extend RDG field to 1 to authorize the AP.

In step S4706, whether the AP has replied with acknowledgment information is determined. If acknowledgment information is returned, step S4708 is performed; and if no acknowledgment information is returned, step S4712 is performed.

In step S4708, the AP acquires a transmission resource and performs data transmission.

In step S4710, whether the AP has returned the transmission resource in advance is determined. If the transmission resource has been returned in advance, step S4712 is performed; and if the transmission resource has not been returned in advance, step S4714 is performed.

In step S4712, the STA reclaims the transmission resource in advance.

In step S4714, the STA reclaims the transmission resource at the expected time.

In step S4716, this extend RD transmission is ended.

### Operation procedure of the AP

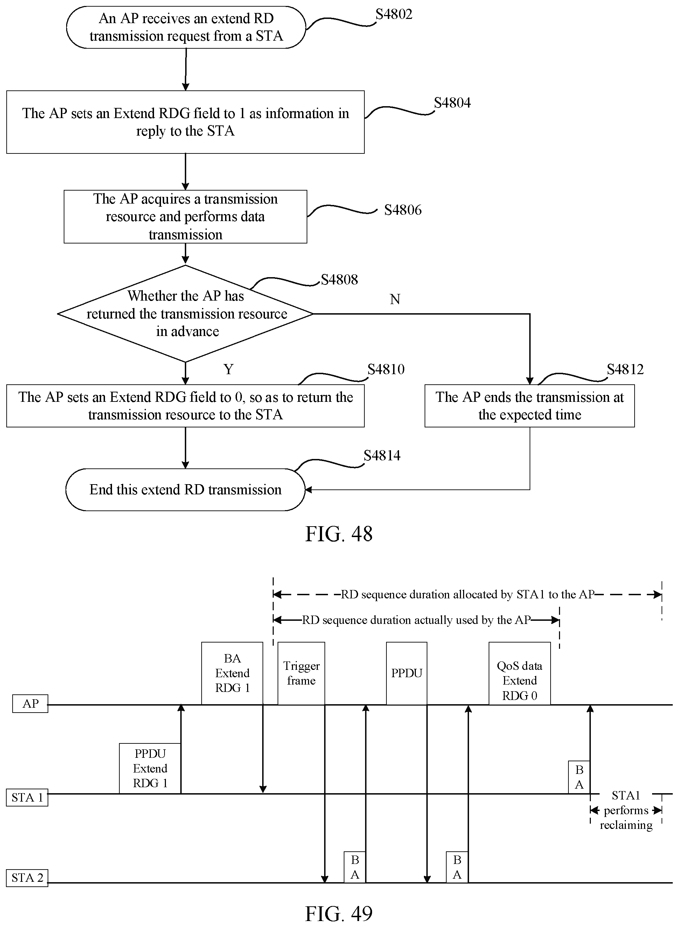

FIG. 48 is a flowchart of an operation of extend RD transmission. FIG. 48 is mainly illustrated from a perspective of the AP.

Referring to FIG. 48, in step S4802, the AP receives an extend RD transmission request from the STA.

In step S4804, the AP sets an Extend RDG field to 1 to reply with acknowledgment information to the STA.

In step S4806, the AP acquires a transmission resource and performs data transmission.

In step S4808, the AP determines whether to return the transmission resource in advance. If the transmission resource has been returned in advance, step S4810 is performed; and if the transmission resource has not been returned in advance, step S4812 is performed.

In step S4810, the AP sets an Extend RDG field to 0 and returns the transmission resource to the STA.

In step S4812, the AP ends the transmission at the expected time.

In step S4814, this extend RD transmission is ended.

### Scenario examples

FIG. 49 shows a scenario where the STA 1 performs extend RD transmission with the AP and the AP performs DL data transmission. The AP is performing UL data transmission with the STA 1, both of them have the extend RD transmission functionality, and in this case, the STA 1 expects the AP to assist a STA 2 in completing a low-latency traffic management operation (this low-latency traffic is related to a service of the STA 1). The STA 1 actively initiates extend RD transmission to the AP. First, the STA 1 allocates extend RD transmission time to the AP, and then the AP performs DL data transmission with the STA 2. After completing the data transmission, the AP actively returns the transmission resource to the STA 1. The STA 1 reclaims the transmission resource in advance.

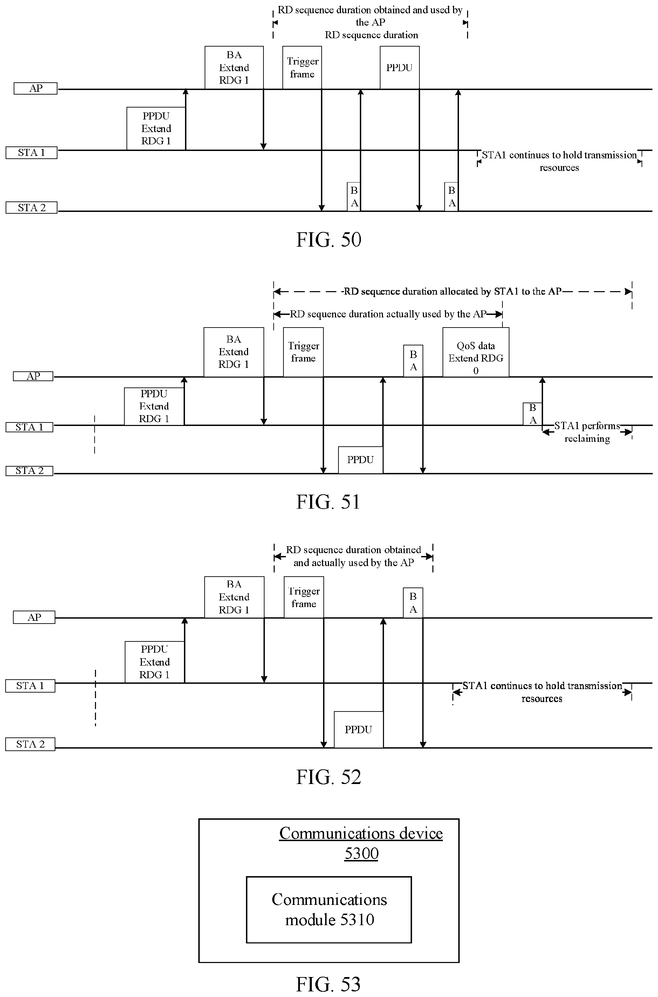

FIG. 50 shows a scenario where the STA 1 performs extend RD transmission with the AP and the AP performs DL data transmission. The AP is performing UL data transmission with the STA 1, both of them have the extend RD transmission functionality, and in this case, the STA 1 expects the AP to assist a STA 2 in completing a low-latency traffic management operation (this low-latency traffic is related to a service of the STA 1). The STA 1 actively initiates extend RD transmission to the AP. First, the STA 1 allocates extend RD transmission time to the AP, and then the AP performs DL data transmission with the STA 2. The AP continues to perform data exchange until the allocated time ends. The STA 1 reclaims the transmission resource at the expected time.

FIG. 51 shows a scenario where the STA 1 performs extend RD transmission with the AP and the AP performs UL data transmission. The AP is performing UL data transmission with the STA 1, both of them have the extend RD transmission functionality, and in this case, the STA 1 expects the AP to assist a STA 2 in completing a low-latency traffic management operation (this low-latency traffic is related to a service of the STA 1). The STA 1 actively initiates extend RD transmission to the AP. First, the STA 1 allocates extend RD transmission time to the AP, and then the AP performs UL data transmission with the STA 2. After completing the data transmission, the AP actively returns the transmission resource to the STA 1. The STA 1 reclaims the transmission resource in advance.

FIG. 52 shows a scenario where the STA 1 performs extend RD transmission with the AP and the AP performs UL data transmission. The AP is performing UL data transmission with the STA 1, both of them have the extend RD transmission functionality, and in this case, the STA 1 expects the AP to assist a STA 2 in completing a low-latency traffic management operation (this low-latency traffic is related to a service of the STA 1). The STA 1 actively initiates an extend RD transmission sequence to the AP. First, the STA 1 allocates extend RD transmission time to the AP, and then the AP performs UL data transmission with the STA 2. The AP continues to perform data exchange until the allocated time ends. The STA 1 reclaims the transmission resource at the expected time.

The foregoing describes the method embodiments of this application in detail. The following describes apparatus embodiments of this application in detail. It should be understood that the descriptions of the method embodiments correspond to descriptions of the apparatus embodiments, and therefore, for parts that are not described in detail, reference may be made to the foregoing method embodiments.

FIG. 53 is a schematic diagram of a structure of a communications device according to an embodiment of this application. A communications device 5300 shown in FIG. 53 may be the first station mentioned above. The communications device 5300 includes:
a communications module 5310, configured to transmit a first frame to a second station, where the first frame includes first information, and the first information is used to indicate that a transmission resource held by the first station is to be shared with the second station for transmission.

In some implementations, the first information includes information related to a first sharing operation, and the first sharing operation is used for sharing the transmission resource with the second station.

In some implementations, the first information includes second information, and the second information is used to indicate a sharing mode of the transmission resource.

In some implementations, the sharing mode of the transmission resource includes one or more of the following:
a first sharing mode, where in the first sharing mode, the first station does not restrict a manner of using the transmission resource by the second station; or
a second sharing mode, where in the second sharing mode, the first station restricts a manner of using the transmission resource by the second station.

In some implementations, the first information includes third information, and the third information is used for restricting a manner of using the transmission resource by the second station.

In some implementations, the third information is used for restricting one or more of the following:
a target communications device participating in target transmission;
a communication bandwidth corresponding to the target transmission; or
a data category corresponding to the target transmission,
where the target transmission is transmission performed by the second station based on the transmission resource.

In some implementations, the first information includes fourth information, the fourth information is used to indicate that the first station accepts a first request initiated by the second station, and the first request is used for requesting the first sharing operation.

In some implementations, the communications module 5310 is further configured to: before the transmitting, by the first station, the first frame to the second station, receive a second frame transmitted by the second station, where the second frame includes the first request.

In some implementations, the first information includes fifth information, and the fifth information is used to indicate that the first station actively shares the transmission resource with the second station.

In some implementations, the communications module 5310 is further configured to:
after transmitting the first frame, receive a third frame transmitted by the second station, where the third frame includes acknowledgment information for the first sharing operation.

In some implementations, the communications module 5310 is further configured to:
receive a fourth frame transmitted by the second station, where the fourth frame includes sixth information, and the sixth information is used to indicate one or more of following:
ending the first sharing operation; or
returning the transmission resource to the first station.

In some implementations, the communications module 5310 is further configured to:
receive a CF-end frame transmitted by the second station.

In some implementations, the first information is carried in a control field.

In some implementations, the control field is a control subfield in an HT control field.

In some implementations, the first frame is a control frame or a data frame.

In some implementations, the first frame includes seventh information, and the seventh information is used to indicate that the first station has a capability to perform the first sharing operation.

In some implementations, the seventh information is carried in an EHT MAC capabilities information field.

In some implementations, the first information is used to indicate that the first station has initiated first reverse direction transmission.

In some implementations, the first reverse direction transmission supports the second station in initiating target transmission based on the transmission resource, where a target communications device participating in the target transmission does not include the first station.

In some implementations, the communications module 5310 is further configured to:
after transmitting the first frame, receive a fifth frame transmitted by the second station, where the fifth frame includes acknowledgment information for the first reverse direction transmission.

In some implementations, the communications module 5310 is further configured to:
receive a sixth frame transmitted by the second station, where the sixth frame includes eighth information, and the eighth information is used to indicate one or more of the following:
ending the first reverse direction transmission; or
returning the transmission resource to the first station.

In some implementations, the first information is carried in a CAS control field.

In some implementations, the first frame includes ninth information, and the ninth information is used to indicate that the first station has a capability to perform the first reverse direction transmission.

In some implementations, the ninth information is carried in an HT extended capabilities field and/or an HE 6GHz capabilities field.

In some implementations, the first frame includes tenth information, and the tenth information is used to indicate duration for which the second station uses the transmission resource.

In some implementations, the tenth information is carried in a duration/identifier field.

In some implementations, the transmission resource is part or all of transmission opportunities.

In some implementations, the second station is an access point.

In some implementations, the first station is associated with the second station.

In some implementations, the first station is a non-access point station.

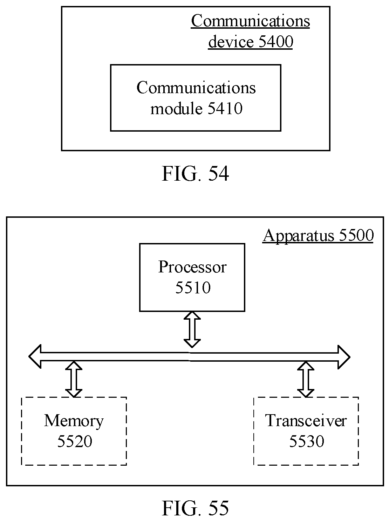

FIG. 54 is a schematic diagram of a structure of a communications device according to another embodiment of this application. A communications device 5400 shown in FIG. 54 may be the second station mentioned above. The communications device 5400 includes:
a communications module 5410, configured to receive a first frame transmitted by a first station, where the first frame includes first information, and the first information is used to indicate that a transmission resource held by the first station is to be shared with the second station for transmission.

In some implementations, the first information includes information related to a first sharing operation, and the first sharing operation is used for sharing the transmission resource with the second station.

In some implementations, the first information includes second information, and the second information is used to indicate a sharing mode of the transmission resource.

In some implementations, the sharing mode of the transmission resource includes one or more of the following:
a first sharing mode, where in the first sharing mode, the first station does not restrict a manner of using the transmission resource by the second station; or
a second sharing mode, where in the second sharing mode, the first station restricts a manner of using the transmission resource by the second station.

In some implementations, the first information includes third information, and the third information is used for restricting a manner of using the transmission resource by the second station.

In some implementations, the third information is used for restricting one or more of the following:
a target communications device participating in target transmission;
a communication bandwidth corresponding to the target transmission; or
a data category corresponding to the target transmission,
where the target transmission is transmission performed by the second station based on the transmission resource.

In some implementations, the first information includes fourth information, the fourth information is used to indicate that the first station accepts a first request initiated by the second station, and the first request is used for requesting the first sharing operation.

In some implementations, the communications module 5410 is further configured to: before the receiving, by the second station, the first frame transmitted by the first station, transmit a second frame to the first station, where the second frame includes the first request.

In some implementations, the first information includes fifth information, and the fifth information is used to indicate that the first station actively shares the transmission resource with the second station.

In some implementations, the communications device 5410 further includes:
after receiving the first frame, transmitting a third frame to the first station, where the third frame includes acknowledgment information for the first sharing operation.

In some implementations, the communications module 5410 is further configured to:
transmit a fourth frame to the first station, where the fourth frame includes sixth information, and the sixth information is used to indicate one or more of following:
ending the first sharing operation; or
returning the transmission resource to the first station.

In some implementations, the communications module 5410 is further configured to:
transmit a CF-end frame to the first station.

In some implementations, the first information is carried in a control field.

In some implementations, the control field is a control subfield in an HT control field.

In some implementations, the first frame is a control frame or a data frame.

In some implementations, the first frame includes seventh information, and the seventh information is used to indicate that the first station has a capability to perform the first sharing operation.

In some implementations, the seventh information is carried in an EHT MAC capabilities information field.

In some implementations, the first information is used to indicate that the first station has initiated first reverse direction transmission.

In some implementations, the first reverse direction transmission supports the second station in initiating target transmission based on the transmission resource, where a target communications device participating in the target transmission does not include the first station.

In some implementations, the communications module 5410 is further configured to:
after receiving the first frame, transmit a fifth frame to the first station, where the fifth frame includes acknowledgment information for the first reverse direction transmission.

In some implementations, the communications module 5410 is further configured to:
transmit a sixth frame to the first station, where the sixth frame includes eighth information, and the eighth information is used to indicate one or more of the following:
ending the first reverse direction transmission; or
returning the transmission resource to the first station.

In some implementations, the first information is carried in a CAS control field.

In some implementations, the first frame includes ninth information, and the ninth information is used to indicate that the first station has a capability to perform the first reverse direction transmission.

In some implementations, the ninth information is carried in an HT extended capabilities field and/or an HE 6GHz capabilities field.

In some implementations, the first frame includes tenth information, and the tenth information is used to indicate duration for which the second station uses the transmission resource.

In some implementations, the tenth information is carried in a duration/identifier field.

In some implementations, the transmission resource is part or all of transmission opportunities.

In some implementations, the second station is an access point.

In some implementations, the first station is associated with the second station.

In some implementations, the first station is a non-access point station.

FIG. 55 is a schematic structural diagram of an apparatus for communication according to an embodiment of this application. Dashed lines in FIG. 55 indicate that a unit or module is optional. The apparatus 5500 may be configured to implement the methods described in the foregoing method embodiments. The apparatus 5500 may be a chip or a communications device.

The apparatus 5500 may include one or more processors 5510. The processor 5510 may support the apparatus 5500 in implementing the methods described in the foregoing method embodiments. The processor 5510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 5500 may further include one or more memories 5520. The memory 5520 stores a program, where the program may be executed by the processor 5510, to cause the processor 5510 to execute the methods described in the method embodiments. The memory 5520 may be independent of the processor 5510 or may be integrated into the processor 5510.

The apparatus 5500 may further include a transceiver 5530. The processor 5510 may communicate with another device or chip by using the transceiver 5530. For example, the processor 5510 may transmit data to and receive data from another device or chip through the transceiver 5530.

An embodiment of this application further provides a computer-readable storage medium for storing a program. The computer-readable storage medium may be applied to the communications device provided in embodiments of this application, and the program causes a computer to perform the methods performed by the communications device in various embodiments of this application.

An embodiment of this application further provides a computer program product. The computer program product includes a program. The computer program product may be applied to the communications device provided in embodiments of this application, and the program causes a computer to perform the methods performed by the communications device in various embodiments of this application.

An embodiment of this application further provides a computer program. The computer program may be applied to the terminal or the network device provided in embodiments of this application, and the computer program causes a computer to perform the methods performed by the communications device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In embodiments of this application, the "protocol" may refer to a standard protocol in the communications field, and may include, for example, a WiFi protocol, and a related protocol applied to a future WiFi communications system, which is not limited in this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first station, a first frame to a second station, wherein the first frame comprises first information, and the first information is used to indicate that a transmission resource held by the first station is to be shared with the second station for transmission.

2. The method according to claim 1, wherein the first information comprises information related to a first sharing operation, and the first sharing operation is used for sharing the transmission resource with the second station.

3. The method according to claim 2, wherein the first information comprises second information, and the second information is used to indicate a sharing mode of the transmission resource.

4. The method according to claim 3, wherein the sharing mode of the transmission resource comprises one or more of following:
a first sharing mode, wherein in the first sharing mode, the first station does not restrict a manner of using the transmission resource by the second station; or
a second sharing mode, wherein in the second sharing mode, the first station restricts a manner of using the transmission resource by the second station.

5. The method according to any one of claims 2 to 4, wherein the first information comprises third information, and the third information is used for restricting a manner of using the transmission resource by the second station.

6. The method according to claim 5, wherein the third information is used for restricting one or more of following:
a target communications device participating in target transmission;
a communication bandwidth corresponding to the target transmission; or
a data category corresponding to the target transmission,
wherein the target transmission is transmission performed by the second station based on the transmission resource.

7. The method according to any one of claims 2 to 6, wherein the first information comprises fourth information, the fourth information is used to indicate that the first station accepts a first request initiated by the second station, and the first request is used for requesting the first sharing operation.

8. The method according to claim 7, wherein before the transmitting, by the first station, the first frame to the second station, the method further comprises:
receiving, by the first station, a second frame transmitted by the second station, wherein the second frame comprises the first request.

9. The method according to any one of claims 2 to 6, wherein the first information comprises fifth information, and the fifth information is used to indicate that the first station actively shares the transmission resource with the second station.

10. The method according to any one of claims 2 to 9, wherein the method further comprises:
after transmitting the first frame, receiving, by the first station, a third frame transmitted by the second station, wherein the third frame comprises acknowledgment information for the first sharing operation.

11. The method according to any one of claims 2 to 10, wherein the method further comprises:
receiving, by the first station, a fourth frame transmitted by the second station, wherein the fourth frame comprises sixth information, and the sixth information is used to indicate one or more of following:
ending the first sharing operation; or
returning the transmission resource to the first station.

12. The method according to any one of claims 2 to 10, wherein the method further comprises:
receiving, by the first station, a contention free-end CF-end frame transmitted by the second station.

13. The method according to any one of claims 2 to 12, wherein the first information is carried in a control field.

14. The method according to claim 13, wherein the control field is a control subfield in a high throughput HT control field.

15. The method according to any one of claims 2 to 14, wherein the first frame is a control frame or a data frame.

16. The method according to any one of claims 2 to 15, wherein the first frame comprises seventh information, and the seventh information is used to indicate that the first station has a capability to perform the first sharing operation.

17. The method according to claim 16, wherein the seventh information is carried in an extremely high throughput medium access control EHT MAC capabilities information field.

18. The method according to claim 1, wherein the first information is used to indicate that the first station has initiated first reverse direction transmission.

19. The method according to claim 18, wherein the first reverse direction transmission supports the second station in initiating target transmission based on the transmission resource, wherein a target communications device participating in the target transmission does not comprise the first station.

20. The method according to claim 18 or 19, wherein the method further comprises:
after transmitting the first frame, receiving, by the first station, a fifth frame transmitted by the second station, wherein the fifth frame comprises acknowledgment information for the first reverse direction transmission.

21. The method according to any one of claims 18 to 20, wherein the method further comprises:
receiving, by the first station, a sixth frame transmitted by the second station, wherein the sixth frame comprises eighth information, and the eighth information is used to indicate one or more of following:
ending the first reverse direction transmission; or
returning the transmission resource to the first station.

22. The method according to any one of claims 18 to 21, wherein the first information is carried in a command and status CAS control field.

23. The method according to any one of claims 18 to 22, wherein the first frame comprises ninth information, and the ninth information is used to indicate that the first station has a capability to perform the first reverse direction transmission.

24. The method according to claim 23, wherein the ninth information is carried in an HT extended capabilities field and/or a high efficiency HE 6GHz capabilities field.

25. The method according to any one of claims 1 to 24, wherein the first frame comprises tenth information, and the tenth information is used to indicate duration for which the second station uses the transmission resource.

26. The method according to claim 25, wherein the tenth information is carried in a duration/identifier field.

27. The method according to any one of claims 1 to 26, wherein the transmission resource is part or all of transmission opportunities.

28. The method according to any one of claims 1 to 27, wherein the second station is an access point.

29. The method according to any one of claims 1 to 28, wherein the first station is associated with the second station.

30. The method according to any one of claims 1 to 29, wherein the first station is a non-access point station.

31. A wireless communication method, comprising:
receiving, by a second station, a first frame transmitted by a first station, wherein the first frame comprises first information, and the first information is used to indicate that a transmission resource held by the first station is to be shared with the second station for transmission.

32. The method according to claim 31, wherein the first information comprises information related to a first sharing operation, and the first sharing operation is used for sharing the transmission resource with the second station.

33. The method according to claim 32, wherein the first information comprises second information, and the second information is used to indicate a sharing mode of the transmission resource.

34. The method according to claim 33, wherein the sharing mode of the transmission resource comprises one or more of following:
a first sharing mode, wherein in the first sharing mode, the first station does not restrict a manner of using the transmission resource by the second station; or
a second sharing mode, wherein in the second sharing mode, the first station restricts a manner of using the transmission resource by the second station.

35. The method according to any one of claims 32 to 34, wherein the first information comprises third information, and the third information is used for restricting a manner of using the transmission resource by the second station.

36. The method according to claim 35, wherein the third information is used for restricting one or more of following:
a target communications device participating in target transmission;
a communication bandwidth corresponding to the target transmission; or
a data category corresponding to the target transmission,
wherein the target transmission is transmission performed by the second station based on the transmission resource.

37. The method according to any one of claims 32 to 36, wherein the first information comprises fourth information, the fourth information is used to indicate that the first station accepts a first request initiated by the second station, and the first request is used for requesting the first sharing operation.

38. The method according to claim 37, wherein before the receiving, by the second station, the first frame transmitted by the first station, the method further comprises:
transmitting, by the second station, a second frame to the first station, wherein the second frame comprises the first request.

39. The method according to any one of claims 32 to 36, wherein the first information comprises fifth information, and the fifth information is used to indicate that the first station actively shares the transmission resource with the second station.

40. The method according to any one of claims 32 to 39, wherein the method further comprises:
after receiving the first frame, transmitting, by the second station, a third frame to the first station, wherein the third frame comprises acknowledgment information for the first sharing operation.

41. The method according to any one of claims 32 to 40, wherein the method further comprises:
transmitting, by the second station, a fourth frame to the first station, wherein the fourth frame comprises sixth information, and the sixth information is used to indicate one or more of following:
ending the first sharing operation; or
returning the transmission resource to the first station.

42. The method according to any one of claims 32 to 40, wherein the method further comprises:
transmitting, by the second station, a contention free-end CF-end frame to the first station.

43. The method according to any one of claims 32 to 42, wherein the first information is carried in a control field.

44. The method according to claim 13, wherein the control field is a control subfield in a high throughput HT control field.

45. The method according to any one of claims 32 to 44, wherein the first frame is a control frame or a data frame.

46. The method according to any one of claims 32 to 45, wherein the first frame comprises seventh information, and the seventh information is used to indicate that the first station has a capability to perform the first sharing operation.

47. The method according to claim 46, wherein the seventh information is carried in an extremely high throughput medium access control EHT MAC capabilities information field.

48. The method according to claim 31, wherein the first information is used to indicate that the first station has initiated first reverse direction transmission.

49. The method according to claim 48, wherein the first reverse direction transmission supports the second station in initiating target transmission based on the transmission resource, wherein a target communications device participating in the target transmission does not comprise the first station.

50. The method according to claim 48 or 49, wherein the method further comprises:
after receiving the first frame, transmitting, by the second station, a fifth frame to the first station, wherein the fifth frame comprises acknowledgment information for the first reverse direction transmission.

51. The method according to any one of claims 48 to 50, wherein the method further comprises:
transmitting, by the second station, a sixth frame to the first station, wherein the sixth frame comprises eighth information, and the eighth information is used to indicate one or more of following:
ending the first reverse direction transmission; or
returning the transmission resource to the first station.

52. The method according to any one of claims 48 to 51, wherein the first information is carried in a command and status CAS control field.

53. The method according to any one of claims 48 to 52, wherein the first frame comprises ninth information, and the ninth information is used to indicate that the first station has a capability to perform the first reverse direction transmission.

54. The method according to claim 53, wherein the ninth information is carried in an HT extended capabilities field and/or a high efficiency HE 6GHz capabilities field.

55. The method according to any one of claims 31 to 54, wherein the first frame comprises tenth information, and the tenth information is used to indicate duration for which the second station uses the transmission resource.

56. The method according to claim 55, wherein the tenth information is carried in a duration/identifier field.

57. The method according to any one of claims 31 to 56, wherein the transmission resource is part or all of transmission opportunities.

58. The method according to any one of claims 31 to 57, wherein the second station is an access point.

59. The method according to any one of claims 31 to 58, wherein the first station is associated with the second station.

60. The method according to any one of claims 31 to 59, wherein the first station is a non-access point station.

61. A communications device, wherein the communications device is a first station, and the communications device comprises:
a communications module, configured to transmit a first frame to a second station, wherein the first frame comprises first information, and the first information is used to indicate that a transmission resource held by the first station is to be shared with the second station for transmission.

62. The communications device according to claim 61, wherein the first information comprises information related to a first sharing operation, and the first sharing operation is used for sharing the transmission resource with the second station.

63. The communications device according to claim 62, wherein the first information comprises second information, and the second information is used to indicate a sharing mode of the transmission resource.

64. The communications device according to claim 63, wherein the sharing mode of the transmission resource comprises one or more of following:
a first sharing mode, wherein in the first sharing mode, the first station does not restrict a manner of using the transmission resource by the second station; or
a second sharing mode, wherein in the second sharing mode, the first station restricts a manner of using the transmission resource by the second station.

65. The communications device according to any one of claims 62 to 64, wherein the first information comprises third information, and the third information is used for restricting a manner of using the transmission resource by the second station.

66. The communications device according to claim 65, wherein the third information is used for restricting one or more of following:
a target communications device participating in target transmission;
a communication bandwidth corresponding to the target transmission; or
a data category corresponding to the target transmission,
wherein the target transmission is transmission performed by the second station based on the transmission resource.

67. The communications device according to any one of claims 62 to 66, wherein the first information comprises fourth information, the fourth information is used to indicate that the first station accepts a first request initiated by the second station, and the first request is used for requesting the first sharing operation.

68. The communications device according to claim 67, wherein the communications module is further configured to: before the transmitting, by the first station, the first frame to the second station, receive a second frame transmitted by the second station, wherein the second frame comprises the first request.

69. The communications device according to any one of claims 62 to 66, wherein the first information comprises fifth information, and the fifth information is used to indicate that the first station actively shares the transmission resource with the second station.

70. The communications device according to any one of claims 62 to 69, wherein the communications module is further configured to:
after transmitting the first frame, receive a third frame transmitted by the second station, wherein the third frame comprises acknowledgment information for the first sharing operation.

71. The communications device according to any one of claims 62 to 70, wherein the communications module is further configured to:
receive a fourth frame transmitted by the second station, wherein the fourth frame comprises sixth information, and the sixth information is used to indicate one or more of following:
ending the first sharing operation; or
returning the transmission resource to the first station.

72. The communications device according to any one of claims 62 to 70, wherein the communications module is further configured to:
receive a contention free-end CF-end frame transmitted by the second station.

73. The communications device according to any one of claims 62 to 72, wherein the first information is carried in a control field.

74. The communications device according to claim 73, wherein the control field is a control subfield in a high throughput HT control field.

75. The communications device according to any one of claims 62 to 74, wherein the first frame is a control frame or a data frame.

76. The communications device according to any one of claims 62 to 75, wherein the first frame comprises seventh information, and the seventh information is used to indicate that the first station has a capability to perform the first sharing operation.

77. The communications device according to claim 76, wherein the seventh information is carried in an extremely high throughput medium access control EHT MAC capabilities information field.

78. The communications device according to claim 61, wherein the first information is used to indicate that the first station has initiated first reverse direction transmission.

79. The communications device according to claim 78, wherein the first reverse direction transmission supports the second station in initiating target transmission based on the transmission resource, wherein a target communications device participating in the target transmission does not comprise the first station.

80. The communications device according to claim 78 or 79, wherein the communications module is further configured to:
after transmitting the first frame, receive a fifth frame transmitted by the second station, wherein the fifth frame comprises acknowledgment information for the first reverse direction transmission.

81. The communications device according to any one of claims 78 to 80, wherein the communications module is further configured to:
receive a sixth frame transmitted by the second station, wherein the sixth frame comprises eighth information, and the eighth information is used to indicate one or more of following:
ending the first reverse direction transmission; or
returning the transmission resource to the first station.

82. The communications device according to any one of claims 78 to 81, wherein the first information is carried in a command and status CAS control field.

83. The communications device according to any one of claims 78 to 82, wherein the first frame comprises ninth information, and the ninth information is used to indicate that the first station has a capability to perform the first reverse direction transmission.

84. The communications device according to claim 83, wherein the ninth information is carried in an HT extended capabilities field and/or a high efficiency HE 6GHz capabilities field.

85. The communications device according to any one of claims 61 to 84, wherein the first frame comprises tenth information, and the tenth information is used to indicate duration for which the second station uses the transmission resource.

86. The communications device according to claim 85, wherein the tenth information is carried in a duration/identifier field.

87. The communications device according to any one of claims 61 to 86, wherein the transmission resource is part or all of transmission opportunities.

88. The communications device according to any one of claims 61 to 87, wherein the second station is an access point.

89. The communications device according to any one of claims 61 to 88, wherein the first station is associated with the second station.

90. The communications device according to any one of claims 61 to 89, wherein the first station is a non-access point station.

91. A communications device, wherein the communications device is a second station, and the communications device comprises:
a communications module, configured to receive a first frame transmitted by a first station, wherein the first frame comprises first information, and the first information is used to indicate that a transmission resource held by the first station is to be shared with the second station for transmission.

92. The communications device according to claim 91, wherein the first information comprises information related to a first sharing operation, and the first sharing operation is used for sharing the transmission resource with the second station.

93. The communications device according to claim 92, wherein the first information comprises second information, and the second information is used to indicate a sharing mode of the transmission resource.

94. The communications device according to claim 93, wherein the sharing mode of the transmission resource comprises one or more of following:
a first sharing mode, wherein in the first sharing mode, the first station does not restrict a manner of using the transmission resource by the second station; or
a second sharing mode, wherein in the second sharing mode, the first station restricts a manner of using the transmission resource by the second station.

95. The communications device according to any one of claims 92 to 94, wherein the first information comprises third information, and the third information is used for restricting a manner of using the transmission resource by the second station.

96. The communications device according to claim 95, wherein the third information is used for restricting one or more of following:
a target communications device participating in target transmission;
a communication bandwidth corresponding to the target transmission; or
a data category corresponding to the target transmission,
wherein the target transmission is transmission performed by the second station based on the transmission resource.

97. The communications device according to any one of claims 92 to 96, wherein the first information comprises fourth information, the fourth information is used to indicate that the first station accepts a first request initiated by the second station, and the first request is used for requesting the first sharing operation.

98. The communications device according to claim 97, wherein the communications module is further configured to: before the receiving, by the second station, the first frame transmitted by the first station, transmit a second frame to the first station, wherein the second frame comprises the first request.

99. The communications device according to any one of claims 92 to 96, wherein the first information comprises fifth information, and the fifth information is used to indicate that the first station actively shares the transmission resource with the second station.

100. The communications device according to any one of claims 92 to 99, wherein the communications device further comprises:
after receiving the first frame, transmitting a third frame to the first station, wherein the third frame comprises acknowledgment information for the first sharing operation.

101. The communications device according to any one of claims 92 to 100, wherein the communications module is further configured to:
transmit a fourth frame to the first station, wherein the fourth frame comprises sixth information, and the sixth information is used to indicate one or more of following:
ending the first sharing operation; or
returning the transmission resource to the first station.

102. The communications device according to any one of claims 92 to 100, wherein the communications module is further configured to:
transmit a contention free-end CF-end frame to the first station.

103. The communications device according to any one of claims 92 to 102, wherein the first information is carried in a control field.

104. The communications device according to claim 103, wherein the control field is a control subfield in a high throughput HT control field.

105. The communications device according to any one of claims 92 to 104, wherein the first frame is a control frame or a data frame.

106. The communications device according to any one of claims 92 to 105, wherein the first frame comprises seventh information, and the seventh information is used to indicate that the first station has a capability to perform the first sharing operation.

107. The communications device according to claim 106, wherein the seventh information is carried in an extremely high throughput medium access control EHT MAC capabilities information field.

108. The communications device according to claim 91, wherein the first information is used to indicate that the first station has initiated first reverse direction transmission.

109. The communications device according to claim 108, wherein the first reverse direction transmission supports the second station in initiating target transmission based on the transmission resource, wherein a target communications device participating in the target transmission does not comprise the first station.

110. The communications device according to claim 108 or 109, wherein the communications module is further configured to:
after receiving the first frame, transmit a fifth frame to the first station, wherein the fifth frame comprises acknowledgment information for the first reverse direction transmission.

111. The communications device according to any one of claims 108 to 110, wherein the communications module is further configured to:
transmit a sixth frame to the first station, wherein the sixth frame comprises eighth information, and the eighth information is used to indicate one or more of following:
ending the first reverse direction transmission; or
returning the transmission resource to the first station.

112. The communications device according to any one of claims 108 to 111, wherein the first information is carried in a command and status CAS control field.

113. The communications device according to any one of claims 108 to 112, wherein the first frame comprises ninth information, and the ninth information is used to indicate that the first station has a capability to perform the first reverse direction transmission.

114. The communications device according to claim 113, wherein the ninth information is carried in an HT extended capabilities field and/or a high efficiency HE 6GHz capabilities field.

115. The communications device according to any one of claims 91 to 114, wherein the first frame comprises tenth information, and the tenth information is used to indicate duration for which the second station uses the transmission resource.

116. The communications device according to claim 115, wherein the tenth information is carried in a duration/identifier field.

117. The communications device according to any one of claims 91 to 116, wherein the transmission resource is part or all of transmission opportunities.

118. The communications device according to any one of claims 91 to 117, wherein the second station is an access point.

119. The communications device according to any one of claims 91 to 118, wherein the first station is associated with the second station.

120. The communications device according to any one of claims 91 to 119, wherein the first station is a non-access point station.

121. A communications device, comprising a memory and a processor, wherein the memory is configured to store a program, and the processor is configured to invoke the program in the memory to cause the communications device to execute the method according to any one of claims 1 to 30 or claims 31 to 60.

122. An apparatus, comprising a processor, configured to invoke a program from a memory, to cause the apparatus to execute the method according to any one of claims 1 to 30 or claims 31 to 60.

123. A chip, comprising a processor, configured to invoke a program from a memory, to cause a device installed with the chip to execute the method according to any one of claims 1 to 30 or claims 31 to 60.

124. A computer-readable storage medium, storing a program, wherein the program causes a computer to execute the method according to any one of claims 1 to 30 or claims 31 to 60.

125. A computer program product, comprising a program, wherein the program causes a computer to execute the method according to any one of claims 1 to 30 or claims 31 to 60.

126. A computer program, wherein the computer program causes a computer to execute the method according to any one of claims 1 to 30 or claims 31 to 60.
